# EUROPEAN PATENT SPECIFICATION

(11) **EP 4 208 381 B1**
(45) Date of publication and mention of the grant of the patent: **25.03.2026**
(21) Application number: 21864979.6
(22) Date of filing: 31.08.2021
(51) Int. Cl.: B61K 9/02, B61K 9/08, B61K 9/10, B61L 23/04

(54) **REAL-TIME RAIL WEAR AND DEFECT MONITORING SYSTEM EMPLOYING DISTANCE MEASURING DEVICES**
ECHTZEIT-SCHIENENVERSCHLEISS- UND -FEHLERÜBERWACHUNGSSYSTEM MIT ABSTANDSMESSVORRICHTUNGEN
SYSTÈME DE SURVEILLANCE DE DÉFAUT ET D'USURE DE RAIL EN TEMPS RÉEL UTILISANT DES DISPOSITIFS DE MESURE DE DISTANCE

(30) Priority: 04.09.2020 US 202063074679 P; 30.08.2021 US 202117461413
(43) Date of publication of application: 12.07.2023
(73) Proprietor: Avante International Technology, Inc., Princeton Junction, NJ 08550 (US)
(72) Inventor: CHUNG, Kevin Kwong-Tai, Princeton, NJ 08540 (US); DONG, Xinjun, Bayonne, NJ 07002 (US); HUANG, Yulin, East Windsor, NJ 08520 (US)
(74) Representative: Abel & Imray LLP
(86) International application number: PCT/US2021/048417
(87) International publication number: WO 2022/051270

(56) References cited:
- US-A1- 2006 017 911
- US-A1- 2007 163 352
- US-A1- 2009 073 428
- US-A1- 2009 112 487
- US-A1- 2011 064 273
- US-A1- 2013 191 070
- US-A1- 2017 106 885
- US-A1- 2020 156 676
- US-A1- 2020 156 676
- US-B1- 9 049 433

## Description

The present invention relates to a rail monitoring system and method and, in particular, to a rail monitoring system and method employing distance measuring devices.

Monitoring of track and rails has traditionally employed one or more inspectors who walked the tracks to visually inspect them and where feasible, make necessary adjustments and/or repairs, or report the need for same. That is extremely slow, labor intensive, costly and prone to error.

In recent times, various technologies have been developed to improve the efficiency and accuracy of monitoring track and rails. Measuring devices mounted on special carts and/or cars are one advance, as are more sophisticated measuring devices, some of which may be mounted on trains that operate over the track to be inspected and monitored.

One example of a recent track monitoring system include Applicant's U.S. Patent 10,752,271 entitled "Image Based Monitoring and Detection of Rail/Track Faults" issued August 25, 2020, which is assigned to Avante International Technology, Inc. of Princeton Junction, New Jersey, USA.

US 2020/156676 A1 also describes a system and method for monitoring a track and/or rail utilising geo-tagged images to determine at least track gauge and/or rail fastener integrity.

Applicant believes there may be a need for a system and method for monitoring a track and/or rail(s) that employs an array of distance measuring sensors that operates to directly sense physical measurements associated with a rail, e.g., with a rail head thereof, and of a track.

Accordingly, the invention provides a system for detecting and measuring track defects, according to claim 1.

Further, the invention provides a method for detecting and measuring track defects, according to claim 11.

Optional features of the invention are set out in the dependent claims.

### BRIEF DESCRIPTION OF THE DRAWING

The detailed description of the preferred embodiment(s) will be more easily and better understood when read in conjunction with the FIGURES of the Drawing which include:
FIG. 1 is a perspective view of an example embodiment of a rail monitoring system of the present arrangement, FIGS. 1A and 1B are perspective views of example mounting arrangements therefor, and FIG. 1C is a side elevation of a rail car illustrating example mounting arrangements therefor;
FIGS. 2A, 2B and 2C are cross-sectional views of a rail illustrating examples of fields of view for the rail monitoring system of FIGS. 1 through 1C;
FIGS. 3A and 3B are schematic diagrams representing plan views of example arrangements of arrays of distance measuring sensors usable for the rail monitoring system of FIGS. 1 through 1C, and FIG. 3C is a Table relating to certain example embodiments of FIGS. 3A and 3B;
FIG. 4 is a schematic diagram representing a plan view of another example arrangement of an array of distance measuring sensors usable for the rail monitoring system of FIGS. 1 through 1C, and FIG. 4B is a Table relating to certain example embodiments of FIG. 4;
FIG. 5 is a schematic block diagram of an example embodiment of the example rail monitoring system of FIGS. 1 through 1C;
FIG. 6A is a cross-sectional view of an example rail head and FIG. 6B is a cross-sectional view of an example rail illustrating an example worn condition thereof;
FIG. 7 is a perspective view of a length of a rail illustrating examples of different rail wear conditions thereof, and FIGS. 7A through 7D illustrate various distance measurements of a rail; and
FIG. 8 is a schematic flow diagram illustrating an example method or process performed by the example rail monitoring system described herein, and FIGS. 8A, 8B and 8C are schematic flow diagrams illustrating details of certain features thereof.

In the Drawing, where an element or feature is shown in more than one drawing figure, the same alphanumeric designation may be used to designate such element or feature in each figure, and where a closely related or modified element is shown in a figure, the same alphanumerical designation may be primed or designated "a" or "b" or the like to designate the modified element or feature. Similar elements or features may be designated by like alphanumeric designations in different figures of the Drawing and with similar nomenclature in the specification. As is common, the various features of the drawing are not to scale, the dimensions of the various features may be arbitrarily expanded or reduced for clarity, and any value stated in any Figure is by way of example only.

### DESCRIPTION OF THE PREFERRED EMBODIMENT(S)

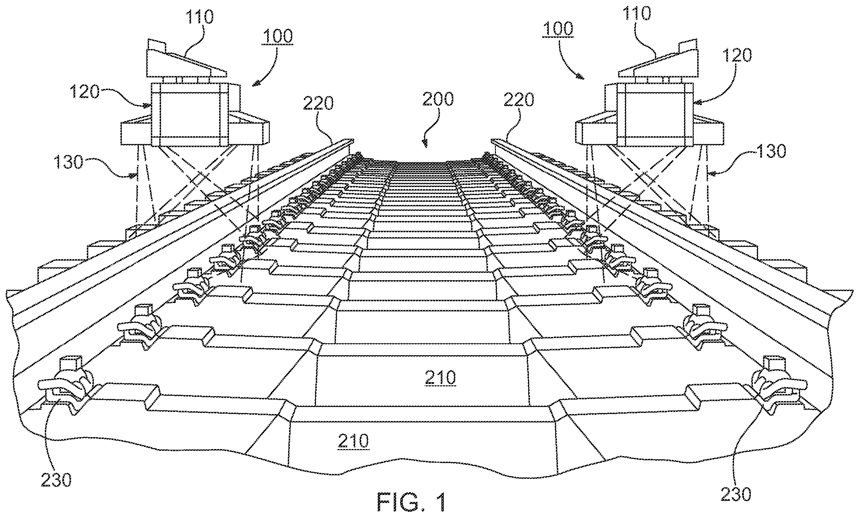

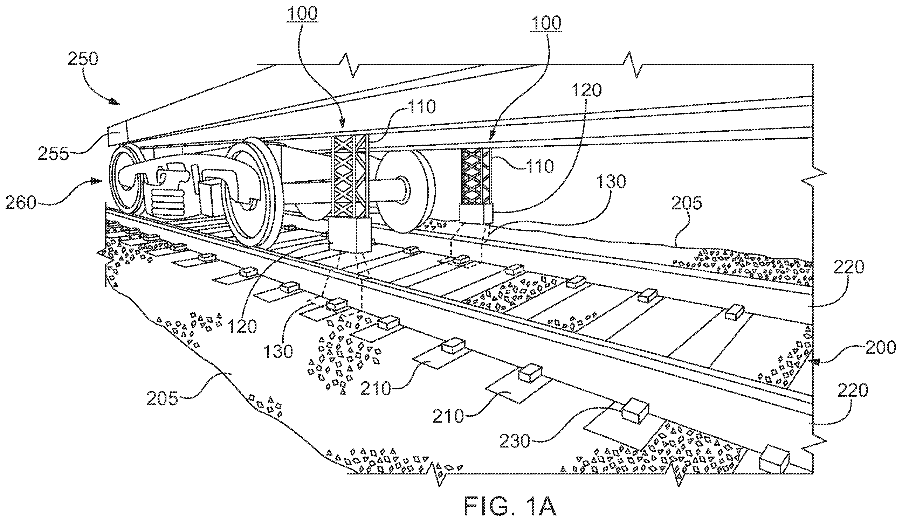

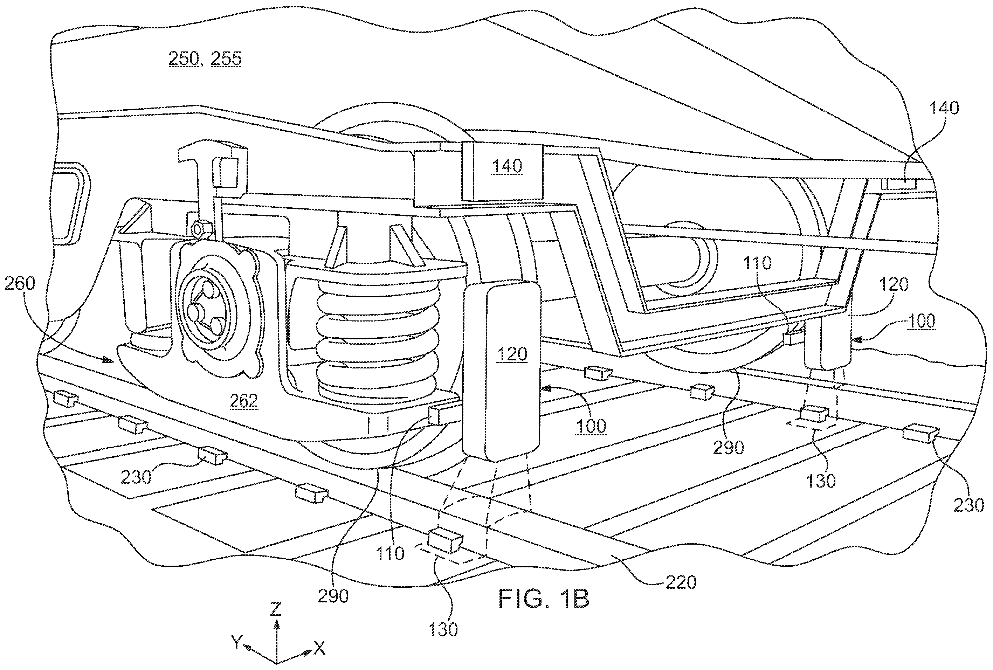

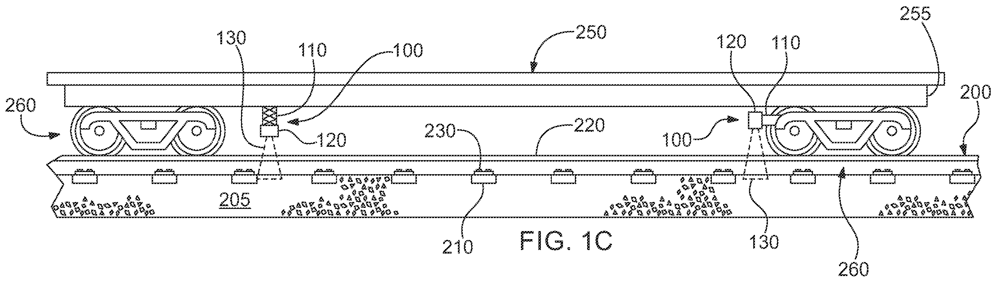

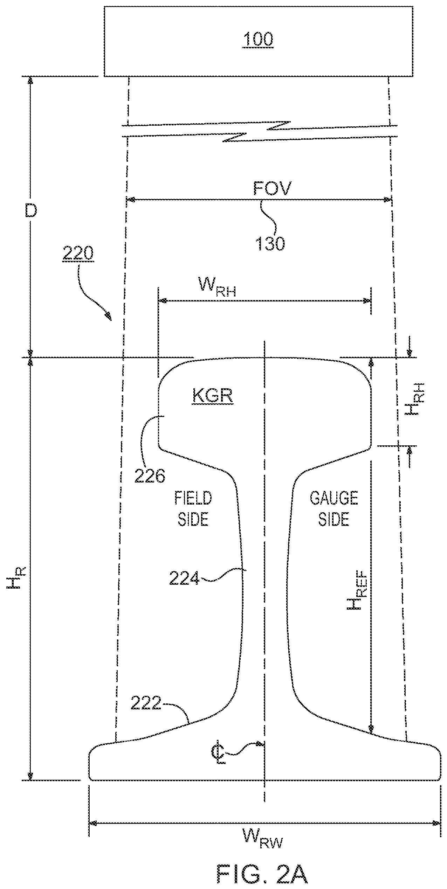

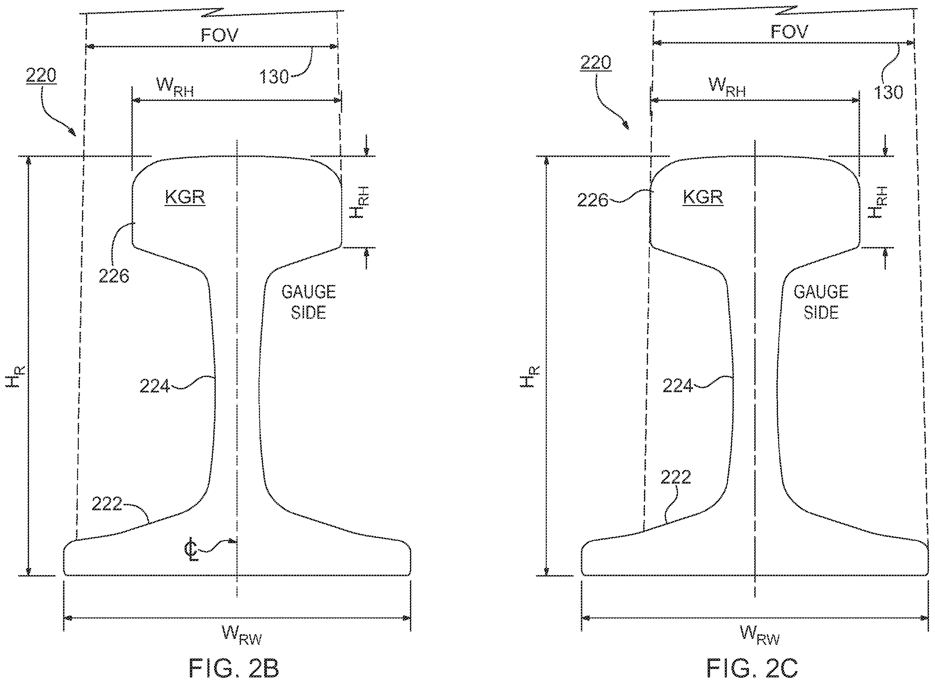

FIG. 1 is a perspective view of an example embodiment of a rail monitoring system 100 of the present arrangement, FIGS. 1A and 1B are perspective views of example mounting arrangements 130 therefor, and FIG. 1C is a side elevation of a rail car 250 illustrating example mounting arrangements 130 therefor; and FIGS. 2A, 2B and 2C are cross-sectional views of a rail 220 illustrating examples of fields of view 130 for the rail monitoring system 100 of FIGS. 1 through 1C.

Example track 200 includes two spaced apart parallel rails 220 that are supported on a multiplicity of crossties 210 or sleepers 210 that are supported by a rail bed and ballast 205. Each rail 220 is secured to each crosstie by rail fasteners 230 of which there are many different types and kinds. The distance between the inner sides (gauge sides) of rails 220 is the gauge of the track. One common standard track gauge is four feet, eight and one-half inches (4' 8½" or about 1435 mm). An example track/rail monitoring system 100 or apparatus 100 preferably includes two arrays 120 of distance monitoring sensors 120 that are configured to be supported 110 vertically above each rail, e.g., on a railcar running on track 200. Each support structure 110 is preferably attached to railcar 250 at a convenient location thereon, e.g., to a chassis 255 or truck 260 thereof.

While a single monitoring system 100 and sensor array 120 may be employed for monitoring one rail 220 of track 200 so that the systems 100 of trains operating in opposite directions over track 200 will monitor both rails 220 thereof, it is preferred that two systems 100, or one system 100 with two arrays of sensors 120, be employed so that both rails 220 of track 200 are monitored at the same time, which also facilitates the monitoring of track gauge using two systems 100 that are spaced apart transversely to track 200 by a predetermined known distance.

Example railcar 250 includes a chassis 255 that supports the load carried by railcar 250 and plural trucks 260 that run on track 200. Example rail car 250 preferably is a locomotive or engine in which case chassis 255 typically carries one or more motors or engines, e.g., an electric motor and/or a diesel engine, as well as other technical equipment, e.g., transformers and other electrical equipment, control equipment, an operator cab, communication equipment, batteries and/or fuel containers, pantograph and other electrical connections to external sources of electrical power such as overhead wires and third rails. Railcar is intended to encompass any locomotive, engine, carriage and/or other vehicle which runs on and/or along a track; a track may include one or more rails, one or more supports for a railcar, track beds and/or guides of any kind.

In practice, the engine or locomotive 250 is one of the heaviest railcars 250, if not the heaviest, and so causes the greatest loading and stress on the rails and tracks, and so is more likely to make evident rail defects that present when they are heavily loaded and/or stressed. Accordingly, the locomotive 250 is a desirable railcar 250 on which to mount rail monitoring apparatus 100. In addition, since there are fewer locomotives 250 than there are other kinds of railcars 250, fewer rail monitoring systems 100 are needed if mounted to locomotive railcars. Electrical power and communication equipment that is usually needed and/or useful for operating and/or cooperating with rail monitoring system 100 is commonly found on locomotives 250, but not on other kinds of railcars 250. A generic truck 260 is illustrated, however, it is noted that a truck 260 for an engine or locomotive 250 that provides driving power for the locomotive railcar 250, and other railcars 250 connected thereto in a train, typically includes electric or other motive apparatus or mechanical connections with electric or diesel motors for transmitting motive power to wheels 280, and/or additional driving wheels and the like.

Rail monitoring apparatus 100 may be mounted to railcar 250 in any one of several acceptable manners: e.g., on the chassis 255 thereof or on a truck 260 thereof. FIG. 1A illustrates an example mounting of at least the distance measuring sensors 120 of apparatus 100 to the underside of chassis 255 wherein a support structure 110 supports the distance measuring sensors 120 substantially vertically over respective rails 220 and the distance measuring sensors 120 provide a vertically downward view of the rails 220. FIG. 1B illustrates an alternative example mounting of at least the arrays of distance measuring sensors 120 of apparatus 100 to an end of truck 260 wherein the distance measuring sensors 120 are mounted vertically above the respective rails 220 to provide a substantially vertical downward view. FIG. 1C illustrates the foregoing example mountings viewed from the side of a railcar 250, wherein distance measuring sensors 120 are suspended between trucks 260 and are directed substantially downwards so as to view rails 220 vertically downward.

In any of these arrangements, the vertical distance between distance measuring sensor 120 and the crown of rail head 226 of rail 200 may be in a range of about 100 mm to 300 mm. Elements of rail monitoring apparatus 100 other than the array of distance measuring sensors 120 may be mounted near to distance measuring sensors 120, e.g., on railcar chassis 255 or on truck 260, or may be mounted in whole or in part inside of the railcar 250, e.g., as when railcar 250 is a locomotive or engine 250. Generally, the latter may be preferred. When sensors 120 are mounted to a truck 260, it is preferred that they be mounted to an unsprung part 262 thereof so that their distance to the rail 220 is not affected by expansion and compression of the springs of truck 260 that support the chassis of rail car 250.

In any of these arrangements, a support structure 110 for system 100 may be, and usually is, provided to support distance measuring sensors 120 on chassis 255 or on unsprung part 262 of truck 260 at locations and orientations intended to provide desired fields of view 130, e.g., vertically downward. The orientation of the example overall substantially rectangular FOV of array 120SA may be such that its shorter or width dimension is crossways to rails 220, or such that its longer or length dimension is along rails 220, however, another orientation that may be deemed desirable for obtaining a measurement of a particular aspect of the configuration and/or condition of rails 220.

The overall or combined FOV 130 of sensor array 120SA is typically and preferably a substantially rectangular collection (e.g., like an "array of FOVS) of the FOV spots of each distance measuring sensor 120S. Even though the FOV spots of the individual distance measuring sensors 120S may not be rectangular, e.g., are circular, elliptical or oval shaped, the edges of the respective FOV spots of adjacent individual sensor 120S may touch, or may overlap, or may have a gap therebetween. The size of any overlap and/or gap is preferably small relative to the overall size of the individual FOV spots, e.g., less than about 50% of the diameter or other crosswise dimension thereof.

In any of the foregoing arrangements wherein two distance measuring sensor arrays 120 are employed, the gauge of track 200 can be determined from the positions of the rails 220 in the representations of the rails 220 provided by the two distance measuring sensors 120 and calculated using a known dimension, e.g., the fixed known distance between the distance measuring sensors 120. That distance can be physically measured and/or defined by a calibration fixture, e.g., a scale or a track and rails that have the standard dimensions of the track and rails, as part of a calibration procedure for apparatus 100.

A typical section (e.g., length) of track for calibrating system 100 employs a pair of "known good rails" (KGR), typically lengths of new unused standard rails, that are spaced apart to the standard gauge with appropriate precision thereby to comprise a "known good track" (KGT). Calibration is typically performed when or after apparatus 100 is initially installed on railcar 250, as well as at regular re-calibration intervals and/or as part of maintenance or repair thereof.

Alternatively, an example calibration fixture having the standard nominal gauge, e.g., 4 ft. 8½ inches or 1435 mm, marked thereon can be placed across a track 200 resting on rails 220 and the distance measuring sensor arrays 120 can be adjusted, either by adjusting their relative physical position or by electronically adjusting the representations of rails 220, so that the standard gauge marks of the calibration fixture are at a predetermined position therein, e.g., at the center of those representations, within the respective fields of view 130 of distance measuring sensor arrays 120. Gauge can easily be determined (measured) by simple calculation from the locations of the gauge face of each rail in the respective representations thereof provided by each array of distance measuring sensors 120 and the calibrated gauge distance.

For example, if the locations of rails 220 in operational representations of the rails of a track 200 are at the predetermined positions therein, e.g., at the centers of the respective FOVS 130, or if both are to the left or the right by the same amount, then the gauge is nominal. As is further described below, it may be desired that the gauge face of a rail 220 be closer to the inner edge of the FOV 130 so that a smaller array of sensors 120 (e.g., narrower width of FOV) may be employed, e.g., to view part of the width of the rail head, in which case the gauge measurement calculation is the same, but the locations in the representation and/or the calibrated distance between the pair of sensor arrays 120 may have different values than if all were centered.

Further, calibration may also include verifying the distance measured by a distance measuring sensor of sensor array 120, 120S to a particular object, e.g., to a rail, rail fastener, and/or any part thereof, such as a time-of-flight (TOF) measuring device 120, 120S. While a TOF distance measuring device 120, 120S tends to be inherently calibrated because it measures the time, e.g., between the transmission of light and its return due to reflection, as a direct indicator of distance, calibration as installed on a railcar 250 may be desirable to identify errors that may be introduced due to tolerances and variations in mounting arrangements, e.g., location and angle, and differences among various types and kinds of railcars and/or parts thereof.

Track and/or rail monitoring apparatus 100 monitors track 200 and rails 220 thereof by employing distance measuring sensor 120 to capture representations of the distances within its FOV 130 which, if the FOV thereof is so oriented and of sufficient width, may include all or part of one or more of the rail fasteners 230. The distance representations of a rail fastener 230 can be used to identify the type of rail fastener represented and to determine from variations of measured dimensions from a standard representation thereof whether the rail fastened is unfastened, lose or damaged or is otherwise in need of maintenance or repair.

One or more distance measuring sensors 120 are mounted to railcar 250, e.g., to the chassis 255 of railcar 250, in locations where they can be aimed such that their FOV satisfies the criteria in the preceding paragraphs. Where two distance measuring sensors 120 are employed, each of the distance measuring sensors 120 is preferably mounted to the underside of chassis 255 or to truck 260 directly over a respective one of rails 220 so as to have a straight-on view of rails 220. The distance D between each array of distance measuring sensors 120 and the rail head 226 that is within its FOV may be about 100-300 mm (about 4-12 inches), however, lesser or greater distances, e.g., up to one meter, are also satisfactory.

The support structure 110 that mounts distance measuring sensors 120 to the chassis 255 of railcar 250 or to the truck 260, preferably to an unsprung part 262 of truck 260, in the embodiments of FIGS. 1 to 1C typically spaces the distance measuring sensor 120 away from chassis 255 or truck 260 so that it is closer to rail 220, e.g., at the desired distance D therefrom.

Rails 220 have a nominal standard overall height HR between the bottom of web 222 and the crown of rail head 226, a nominal standard reference height HREF between the crown of rail 220 and a point on its web 222 directly beneath its gauge side surface, a nominal standard rail head width WRH between its gauge side, a nominal standard rail head height HRH between its crown and the bottom edge of its gauge side surface, and a nominal standard width WRW between the opposite edges of its web. The array of distance measuring sensors 120 is mounted such that it is a preferred nominal vertical distance D above the crown of rail head 226. Variations in distance D, e.g., due to loading and/or rocking of railcar 250 and/or wear of the wheels of truck 260, tend to cancel out from the largely subtractive processing of the distance representations of rail 220 provided by sensor arrays 220, aided by the consistency of its measurement accuracy.

In one example of a standard rail 220, the rail has a nominal overall height HR of about 140 mm (about 5.5 inches), a nominal reference height HREF of about 119.2 mm (about 4.69 inches), a nominal rail head width WRH of about 70 mm (about 2.76 inches), a nominal rail head height HRH of about 30.3 mm (about 1.19 inches), and a nominal standard width WRW of about 114 mm (about 4.48 inches).

Distance measuring sensors 120 have respective fields of view (FOV) 130 preferably including more than the majority (i.e. >50%) of the nominal width WRH of the rail head 226 of rails 220 on which wheels 280 run, which could preferably also include within the FOV 130 at least part of rail fasteners 230 that are securing rail 220 at least along the gauge side thereof. In another preferred configuration distance measuring sensors 120 are configured to have a FOV that is wider than the width WRH of rail head 226 so as to measure all across the width of rail head 226 even with side-to-side movement of distance measuring sensors 120.

Because truck 260 rotates relative to chassis 255 and rail 220 as railcar 250 navigates a curve in track 200 and/or as the trucks 260 of railcar 250 move, e.g., side to side, between rails 220 within the track gauge tolerance, the FOV typically moves leftward (FIG. 2B) and rightward (FIG. 2C) relative to rail 220. This configuration of distance measuring sensors 120 and their mounting avoids a FOV that moves so much as to not include at least the majority of the width WRH of rail head 226 at the extremes of its nominal movement, if not of its maximum movement for rails within gauge tolerances, as well as where gauge widening results due to, e.g., rail wear, track gauge tolerance, and possible sideways (transverse) shifting of the rails, e.g., due to distortion and/or looseness of rail fasteners.

Preferably, sensor arrays 120 have a FOV 130 that over scans the desired region of rail head 226 as illustrated in FIGS. 2A-2C so that the portion of the width WRH of rail head 226 to be measured remains within the FOV 130 as train motion, e.g., side-to-side motion of truck 260 between rails 220, causes movement of sensor array 120 to the left and to the right. Preferably, FOV 130 includes the entire nominal width WRH of rail head 226 plus a predetermined additional width so that the entire nominal width WRH of rail head 226 remains within FOV 130 over the expected range of side-to-side motion of distance measuring sensor arrays 120SA relative to the rail 220 over which they are positioned and at least the maximum allowable widening of the track gauge, e.g., due to tolerances, wear and/or other causes.

A system 100 having FOV that covers the portion of rail head 226 between its centerline and its gauge face (plus a margin allowing for side to side movement of truck 260) is also suitable, e.g., where a reduced complexity or lower cost system 100 is desired, while providing rail head profile measurements of the inner half of rail head 226 which is where the most significant rail wear is believed to occur under normal circumstances.

Because distance measuring sensor 120 preferably includes a transmitter having an infrared (IR) light source, e.g., a laser light source of IR light, and a receiver thereof, there is no need for an illumination light source, e.g., a source of visible, infrared and/or other light, to ensure that the light level within FOV 130 is sufficient to obtain satisfactory representations of rail 220 under differing ambient light and weather conditions, including direct sunlight.

Structure 110 typically includes structural bracing, dampers and/or vibration isolating mounts so as to reduce motion of distance measuring sensor array 120 due to vibration and other undesired motion that may be caused by railcar 250 running along track 200 and/or by equipment, e.g., a diesel engine, on railcar 250. A lens cleaning feature, e.g., a lens wiper or spray cleaner or hood or other shield, may also be provided to reduce degradation of the distance representations produced by distance measuring sensors 120 due to accumulation of moisture, dust, dirt and other debris that might tend to become deposited on the lens thereof over time and use.

The fields of view FOV 130 of sensor arrays 120 are illustrated as being generally rectangular as is the case, e.g., each one is mounted substantially vertically above a respective rail 220, and aimed for separately viewing each rail 220. If distance measuring sensor 120 is mounted a significant distance higher than rails 220, then the small divergence angle of its field of view will increase the size of the area that is within its field of view 130 at greater distance and will reduce the size of the area that is within that FOV 130 if it is mounted lower, e.g., closer to track 200.

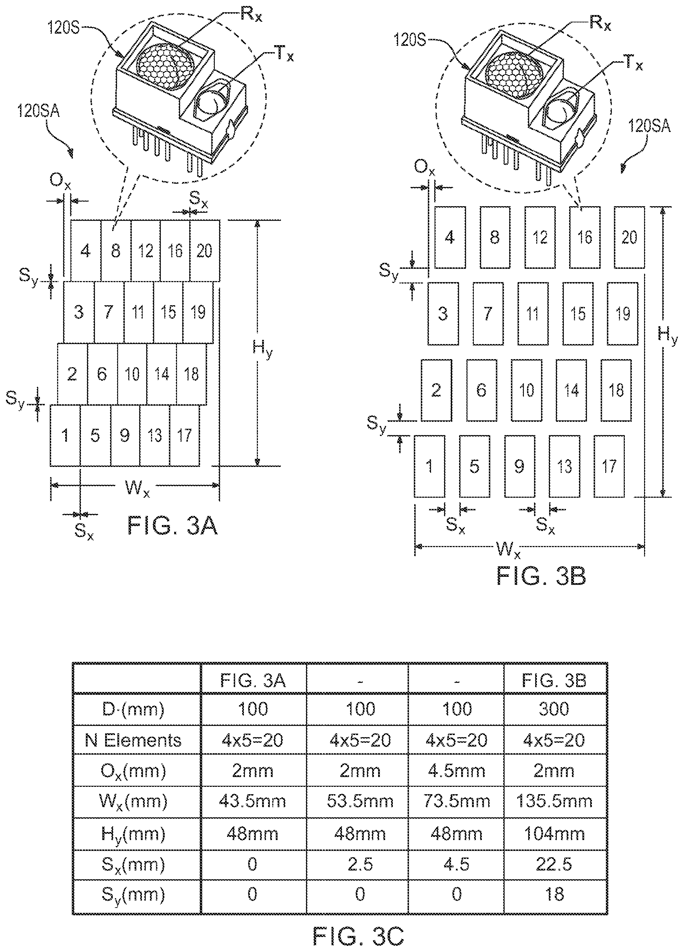

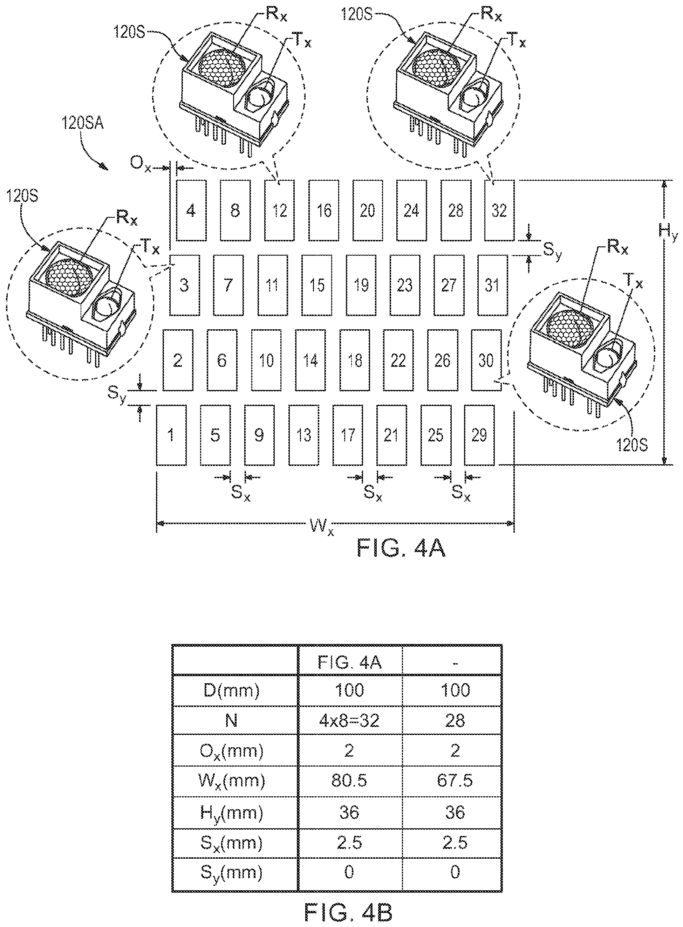

FIGS. 3A and 3B are schematic diagrams representing plan views of example arrangements of arrays of distance measuring sensors 120S usable for the rail monitoring system 100 of FIGS. 1 through 1C, FIG. 3C is a Table of values relating to certain example embodiments of FIGS. 3A and 3B; and FIG. 4 is a schematic diagram representing a plan view of another example arrangement of an array of distance measuring sensors 120S usable for the rail monitoring system 100 of FIGS. 1 through 1C, and FIG. 4B is a Table of example values relating to certain example embodiments of FIG. 4.

Each of the example arrays 120SA of distance measuring sensors 120S includes plural rows of sensors 120S and plural columns of sensors 120S. Each example sensor array 120SA has an overall length (vertical in the illustration) dimension Hy (i.e. in a longitudinal direction along a rail 200) and an overall width (horizontal in the illustration) dimension Wx (i.e. in a direction transverse to rail 200). Each distance measuring sensor array 120SA comprises a number N of distance measuring sensors 120S with each row thereof typically having the same number Nx of sensors 120S and each column thereof typically having the same number Ny of sensors 120s, wherein Nx and Ny may be the same number or different numbers in any given array 120SA.

Plural examples of embodiments of distance measuring sensor arrays 120SA are illustrated and include, e.g., 4x5 = 20 sensor arrays and a 4x8 = 32 sensor array, and example features thereof are set forth in the accompanying Tables of FIGS. 3C and 4B. Additional sensors 120S may be provided in the rows of sensor array 120SA either to increase the width of the FOV of array 120SA and/or to increase the resolution thereof in the direction transverse to rail 220. Similarly, additional sensors may be provided in the columns thereof either to increase the length of the FOV of array 120SA along rail 220 and/or to increase the resolution thereof in the direction along rail 220.

In each sensor array 120SA the plural rows of sensors 120S have a vertical separation distance Sy between adjacent sensors and the plural columns of sensors 120S have a horizontal separation distance Sx between adjacent sensors 120S and have respective horizontal offset distances Ox for adjacent sensors 120S in each column thereof. In one preferred arrangement, each distance measuring sensor array 120SA comprises the number N of distance measuring sensors 120S arranged on a substantially planar substrate or other support.

Each distance measuring sensor 120S includes a transmitter part Tx that emits a signal having a given fixed frequency and a receiver part Rx having plural receiving elements for receiving reflections of the emitted signal that are reflected by an object illuminated by transmitter part Tx, e.g., a rail 220. Preferably, transmitter Tx emits an infrared (IR) signal and the time delay, (e.g., its time of flight TOF) between its transmission by transmitter Tx and its reception by one or more of receiving elements of receiver part Rx directly represents the distance between the distance measuring sensor 120S and, e.g., the rail 220.

Because the diameter of the beam of IR light emitted by transmitter increases as the distance between the sensor 120 and the sensed object, e.g., rail 220, increases, the sensors 120S may be separated by greater distances Sx, Sy on a planar substrate or may remain relatively closer and be mounted to a support that is flat or that has curvature of, e.g., a part of the surface of a cylinder or of a sphere or the like.

Advantageously, the array of distance measuring sensors 120 provides a three dimensional representation of what is in the combined FOV of the sensors 120S thereof, e.g., the rail 220. Two dimensions, e.g., X and Y, are provided by the Nx, Ny sensors arrayed in a two dimensional array. The third dimension, e.g., Z, is provided by the distance measurements from each of the sensors 120S of the sensor array 120SA. With regard to a rail 220, the X dimension covers the width, e.g., the horizontal width, of the rail 220 within the combined fields of view, e.g., of the rail head thereof, the Y dimension covers a length, e.g., a horizontal length, of the part of the rail that is within the combined FOV, and the Z dimension covers the vertical dimensions of the rail including, e.g., that of the crown and shape of the rail head and in a typical case, the distance from the crown to the web of the rail, as described below.

Distance measuring sensor 120S may be any distance measuring sensor that provides suitable resolution for detecting discernable defects in a rail 220, and in an array having a sufficiently wide FOV the rail fasteners 230 thereof, and for determining track gauge when employed in conjunction with an associated sensor 120S for a parallel rail, that are determinable from the distance measurement data and a suitably high frame rate as to represent the rail or rails 220 continuously while railcar 250 is traveling at speed. The frame rate at which the array 120SA of sensors 120S operates may be fixed, e.g., at a rate determined to obtain the desired resolution for distance traveled at a given speed or at a maximum speed to be traveled, or the frame rate may be controlled proportionally to the speed at which the railcar 250 on which sensors 120S are mounted is traveling, and in one example preferably proportionally to actual speed so as to maintain substantially the same traveled distance between successive frames of measurement data irrespective of speed.

Examples of allowable tolerances for a standard 1435 mm (4' 8½") gauge track 200 include: gauge widening to 1450 mm for operating speeds up to 125 mph before an alert is to be provided, to 1458-1460 mm to require correction within 14-28 days. Further widening beyond those tolerance limits is considered track defect (fault) which requires correction within 36 hours for widening to 1463-1470 mm, and requires that the line be immediately blocked (shut down) for widening to 1472-1478 mm. The lower widening tolerances are for higher speeds and the lower tolerances are for operating at higher speeds.

For an example rail 220 having a rail head width of 70 mm, the required width of the field of view would be the rail head width plus the maximum permitted widening tolerance which would be 70 mm + 23 mm = 105 mm, while for up to a 1470 mm widened gauge would be 70 mm + 18 mm = 88 mm. Because rail wear is predominantly on the gauge side of the rail head, i.e. the side of the rail head along which the flange of wheel 280 runs, which is also where defects are more likely to present, if one were to choose to monitor only the 50% of the rail head width on the gauge sides of the rails, then the width of the fields of view would be 35 mm + 23 mm = 58 mm, and 35 mm + 18 mm = 53 mm, respectively.

Examples of suitable time of flight TOF distance measuring sensors 120S may include, e.g., a model AFBR-S50MV85G which is commercially available from Broadcom Inc. of San Jose, California, USA. According to the Broadcom data sheet the transmitter thereof emits IR light from an 850nm wavelength laser light source and the receiver thereof has a 4x8 pixel array of adjacent receiver elements (32 total) of which about 7-16 pixels are typically illuminated by the reflected IR light. That TOF distance measuring sensor has a frame rate of up to 3KHz and a distance range up to and greater than 10 m, and measures distance within about 0.1 mm accuracy.

Because the size, e.g., diameter, of each spot of laser light impinging upon rail 220 is proportionally larger at longer distances D between distance measuring sensor array 120SA and rail 220, the resolution of the distance measurements proportionally decreases with increasing distance D, e.g., because each distance measuring sensor 120S measures an average distance over the area of its spot. Accordingly, the distance measuring sensors 120, 120S of any arrangement described herein are preferably mounted to be a distance D of about 100-300 mm from the measured rail 220, and more preferably at a distance D of about 100 mm therefrom.

With an array of such sensors at an example distance D between the sensor array 120SA and an object, e.g., rail 220, to which distance is to be measured of about 100 mm (about 4 inches), each transmitted IR light beam has a nominal diameter of about 7 mm and each pixel has an FOV of about 2.7 mm thereby illuminating between 7 and 16 pixels, typically about 9 pixels. D = 100 mm is presently believed to be a suitable distance for measurement in the described example embodiment, however, shorter and longer distances D are also suitable.

An array of 10 sensors 120S can provide measured distance representations at about 3 mm intervals, an array of 15 sensors 120S can provide measured distance representations at about 2 mm intervals, and an array of 30 sensors can provide representations at about 1 mm intervals. The spot diameter of example sensors 120S is about 8-10 mm at a distance D of about 100 mm and is about 24-30 mm at a distance D of about 300 mm. While each array measurement is at a particular location along rail 220, such measurements can be averaged over longer distances along rail 220 to obtain an average rail profile measurement for a particular section of track 220, as may be desirable for rail monitoring and maintenance purposes. By way of examples, it may be desirable to provide processed rail measurement data at finer resolution for high speed curves where wear and defects can develop more quickly and present a greater risk than for sidings and the similar lower speed sections of tracks where lesser resolution is satisfactory because wear and defects tend to develop more slowly and present a relatively lower risk.

No matter how the measurement data may be processed and utilized, the present arrangement retains the advantage of being capable of providing relatively real time and daily monitoring of all rails upon which trains equipped with rail monitoring system 100 are operated, and to do so with sufficient resolution and accuracy to measure wear and detect defects before they become severe enough to present a risk to life and property.

Using the example sensor 120S operating at a 3 KHz frame rate, i.e. 3000 frames per second, will provide substantially continuous sensing along a rail 220 while the railcar carrying the sensor array 120SA travels at normal operating speeds. For example, when traveling at 60 miles per hour (mph; about 100 km/hr), or 88 ft./sec., the distance covered in 1/3000 sec. equals: 88 ft/sec. x 1/3000 = 0.029 ft = 7.5 mm along the direction of the rail. Thus there is ample resolution in the y direction, i.e. along the rail, to detect gaps and cracks and other relatively small defects.

With that sampling rate, at 120 mph (about 200 km/hr) each representation covers about 15 mm and at 240 mph (about 300 km/hr) each representation covers about 30 mm. Because the example arrays 120SA have a Y dimension Hy of 36 mm or more, the described example arrangement is able to cover the complete length of the track without substantial gaps in the data even when the railcar is moving at 240 mph (about 300 km/hr). Further, because the pulse length of the IR light is very short, e.g., about 10 nanoseconds, the measuring interval is sufficiently short that the dimensional accuracy of the representation of the rail 220 obtained in that time will not be affected by the relatively short distance traveled during the measurement interval when the sensor array 120SA is on a railcar traveling at a high operating speed.

All of the distance measuring sensors 120S of sensor array 120SA may be synchronized to make distance measurements simultaneously, e.g., at the same time, or they may be synchronized to make distance measurements in sequence, where the sequence may be one at a time or may be one row at a time or one column at a time, or in another desired sequence. In any event each set of distance measurements are made substantially contemporaneously, e.g., the duration of the sequence for all of the sensors 120S of sensor array 120SA is about one tenth or less of the time of each frame, and preferably at about one hundredth or less of the time of each frame.

Where operating speed is limited to lower values, or where a less frequent measurement along rails 220 is acceptable, a sampling rate lower than 3000 frames per second may be used. If the array of sensors 120SA is operated with each sensor 120S having a 10 nsec. pulse width and with the individual sensors 120S triggered at 1 :sec. intervals, the data collection time for a 32 sensor array will be 32 :sec. which is less than about one tenth of the 333 :sec. time of each frame, which could reduce the distance traveled while accumulating a frame of representation data while traveling at 240 mph (about 300 km/hr). Thus, typically, a lower frame rate may be employed while still capturing suitable frame representations of rails 220.

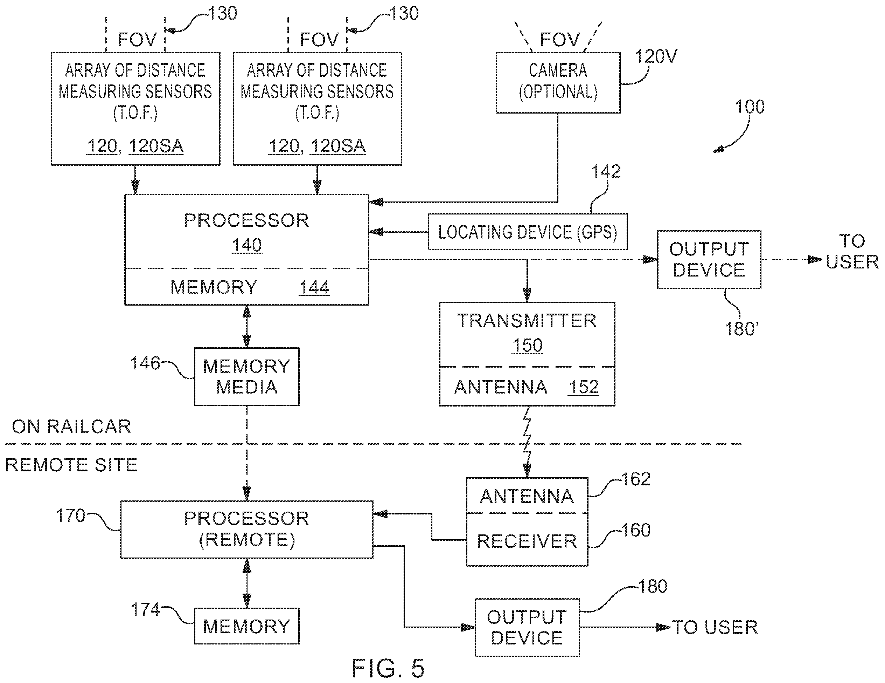

FIG. 5 is a schematic block diagram of an example embodiment of the example rail monitoring system 100 of FIGS. 1 through 1C;

One or more arrays of monitoring systems 100 including distance measuring sensor arrays 120SA mounted on railcar 250 provide three dimensional representations of track 200 and particularly of the rails 220 thereof (measurement data) that are within their respective fields of view (FOV) 130 to processor 140 also associated with railcar 250, e.g., within a monitoring system 100 or elsewhere on railcar 250. Processor 140 processes and stores the measurement data in an associated memory device 144, typically a solid state or magnetic disk hard drive. The measurement data may also be stored on a removable memory medium 146, such as a data storage device, a data medium, a memory device, a USB memory stick, a thumb drive, a memory card, an optical disk, a CD ROM, a hard drive, or other portable memory device 146, or any combination thereof, that can be removed and transported to provide the measurement data to a processor 170 which is located remotely from railcar 250, e.g., a remote processor.

Also mounted on railcar 250 is a locating device 142, usually a GPS locating device 142, that provides location data representative of the location of railcar 250 in substantially real time to processor 140 which associates the location data and the measurement data, e.g., to geo-tag the measurement data. Because the location represented in the measurement data is known from the location data and is associated with that measurement data, e.g., being geo-tagged therewith, the measurement data can be utilized to find the specific track and/or rail that has been measured, e.g., the track, rail or an aspect thereof, and/or to create profiles of conditions along a length of rails 220 for any desired length or geographically defined section.

Locating device 142 may be a single GPS device or redundant GPS devices, and/or may utilize two or more different and independent global positioning systems, e.g., the US GPS system, the Russian GLONASS system, the European Galileo system, the Indian IRNSS system and/or the Chinese BDS system, so that geographic location data is available even when one GPS system is out of range or out of service, however, such redundancy may not be necessary or affordable in any particular instance.

Preferably, time data representing the time at which the measurement data was acquired is also associated with the measurement data so that both the location and time thereof are known. Time data may be acquired from the GPS locating device 142 or from a time standard associated with railcar 250, e.g., an engine control system thereof, or with processor 140. Typically, geo-tagged data includes both an associated location and a date-time stamp, e.g., the date and time of its acquisition, unless expressly stated otherwise.

GPS device 142 also provides an indication of speed, which is the rate of change of location, which can be used, if need be, to reduce error in the location data due to the processing time of the GPS device 142, e.g., the time between when the GPS satellite signals are received and the time when the location data has been derived therefrom and presented. This usually need not be undertaken, however, because significant track defects are not usually confined to a very short distance, e.g., a few feet or meters, but arise over tens of feet or tens of meters, if not longer distances, e.g., soil and/or rail bed erosion and damage from water or local flooding. In any event, given that the magnitude of such error may be calculated or at least estimated from the available geo-tagged measurement data, location data and/or time data, the location of a defect or other particular condition may be determined with sufficient accuracy to allow maintenance or repair personnel to quickly find such location.

Distance measuring sensor 120 may provide dimensional representations in the visual light band, in the infrared band or in a combination thereof, and/or may map measurement data in terms of distance to the object in view, e.g., as with a time-of-flight distance measuring sensor. In addition, a temperature measuring sensor, e.g., one sensing in the IR range, may be employed to provide temperature data representing the temperature of the ambient environment and that of the rail and/or track. One example of a suitable IR temperature sensor is a type MLX90640 sensing device available from Melexis NV of Belgium and Melexis, Inc., of Nashua, New Hampshire, which has a 32 x 24 pixel IR thermal sensing array. The IR temperature sensing device may be included in rail monitoring system 100 which includes distance measuring sensor array 120, e.g., at or near the location of the TOF sensors 120S, 120SA, and is preferred to have a FOV similarly directed towards rail 220. The temperature data is preferably geo-tagged and can provide a temperature profile of the rail against the ambient temperature.

Vibration while railcar 250 is rolling, e.g., resulting from rail, wheel, journal bearing, and/or other irregularities, can be monitored from dimensional representations produced by distance measuring sensors 120S, 120SA, or from a vibration sensor coupled to processor 140, e.g., where device 142 includes one or more sensors in addition to a location sensor, thereby providing a further indication that a need for inspection and/or repair may be indicated.

In any of the foregoing examples, the distance measuring sensors 120SA are preferably attached to a truck 260 at a part thereof to which the wheels 280 are also attached, rather than on a sprung part thereof, so that they are at a substantially fixed distance, e.g., about 100 mm, from rails 220. As a result the positions of rail monitoring system 100 and of distance measuring sensors 120SA are substantially fixed relative to rails 220 and so the relatively small movements of distance measuring sensor arrays, 120, 120SA relative to rail 220 do not have a material adverse effect upon the accuracy of the distance measurements made thereby or of the determinations of wear, deformation and defects in rail 220 made from such measurements.

Alternatively and/or additionally, a transmitter 150 and antenna 152 may be provided to communicate geo-tagged distance measurement data and other data to a site remote from railcar 250 whereat it is received by a remote processor 170, e.g., at the end of a journey of railcar 250 and/or at the end of a work day or travel day. In that instance, an antenna 162 and receiver 160 at the remote site receive the transmitted geo-tagged measurement data and couple it to processor 170. It is noted that transmitter 150 and receiver 160 may each include both transmitting and receiving capability where two-way communication is necessary or desirable, and transmitter 150 and/or receiver 160 may be or be part of communication equipment that is otherwise present on railcar 250, e.g., as where railcar 250 is an engine or locomotive, or may be shared with other equipment present on railcar 250, e.g., a GPS location tracking device.

Alternatively, the remote site, which may be at a facility, e.g., at a rail yard, where railcar is located or may be many miles or a continent away from railcar 250, processor 170 may receive geo-tagged distance measurement data via the portable memory media 146 or via receiver 160 and stores that data in a memory 174. Processor 170 in turn provides to an output device 180 indications and/or reports of the determined conditions of tracks 200, rails 220, and/or rail fasteners 230. Where a defect or out of tolerance condition thereof is determined, processor 170 generates an alert and/or warning notice thereof which output device 180 communicates to a user.

Output device 180 may be a printer producing physical documents, a transmitter communicating with a user electronic device, e.g., a smart phone or tablet having a suitable application (an "app."), a monitor or other display that displays data in human perceivable form, an audible device, a visual device, or any other device that can communicate with a user of such data. Output device 180 may include plural output devices 180 that may be located at different locations for different users, e.g., in maintenance and repair facilities for use by personnel thereof, in operations centers for users thereat, in management centers for managers thereat, on or with particular personnel and/or vehicles for their users, and the like, and (perhaps even commonly) combinations thereof. Additionally and/or optionally, output device 180 may be included in system 100 on railcar 250 as is indicated by output device 180'.

In order to provide such reports, warnings, and so forth to the user, the measurement data produced by the one or more distance measuring sensors 120 must be analyzed, compared, e.g., with standard templates and/or dimensions, have calculations made, or be otherwise processed to determine whether the track 200, rails 220, and/or fasteners 230 to which the measurement data pertains are or are not within acceptable limits and are or are not complete and undamaged. Such processing may be performed in whole or in part by processing internal to distance measuring sensors 120, by processor 140 on railcar 250, by remotely located processor 170, by an auxiliary processor, or by any combination thereof.

Optionally, one or more cameras 120V may be provided and have respective fields of view configured to capture visual data, i.e. pictures or other images, of rail 220 at substantially the same location and time at which measurement data is acquired by the one or more arrays 120SA of distance measuring sensors. The visual data is processed by processor 140 including being geo-tagged with location data and time/date data and stored as geo-tagged visual data in memory 144 for transfer via memory media 146, via output device 189' in like manner to measurement data and other data as illustrated in the remainder of FIG. 5 and described herein. Thus, the measurement data acquired by sensor arrays 120SA and camera 120V are related by the location data and the date/time data associated therewith, thereby enabling searching related measurement data and visual data for purposes of evaluation and/or analysis.

It is noted that the visual data from camera 120V need not be analyzed for detecting wear and/or defects, but may simply be stored, whereby it can later be retrieved using its geo-tagging data, e.g., by location and date/time, to be used, e.g., viewed by a person, to aid and/or improve understanding of the conditions of the rails 220 contained in reports of wear and/or defects generated by system 100 as described. In that manner the qualitative visual data aids in, e.g., clarifying and understanding the quantitative distance measurement data in its processed, partly processed, and/or unprocessed forms as a track engineer or analyst might find helpful.

Measurement data, geo-tagged measurement data, location data, processed data therefrom, and the like, are preferably stored in memory 144, in memory medium 146, in memory, 174, and/or in other memory devices in a searchable relational data base from which the data may easily be accessed and retrieved for processing, analysis and/or reporting based upon one or more user defined searching criteria. Because the data is geo-tagged, which includes a date-time stamp representing the date and time at which it was acquired, and by which measurement data can be searched and retrieved, historical analysis may be performed, thereby revealing trends and similarities, and revealing deteriorating conditions, whereby reports thereof may be generated that are helpful to the management and operation of the railroad whose tracks and rails are monitored by system and apparatus 100.

Communication herein may be via any one or more of wireless communication, wired communication and/or optical communication. Examples thereof include, e.g., a cellular communication system, a cellular base-station and repeater system, a GSM cellular system, a GPRS cellular system, a wireless communication, radio communication, a broadband link, another wireless and/or cellular system, the Internet and/or another network, a radio communication system, a direct radio communication, a wired and/or fiber device, a radio system, a WiFi network, an ad hoc network, Bluetooth, RFID devices, a radio network, one or more repeaters and/or relays, one or more land lines and/or optical fibers, satellite links, Internet connections, LAN networks, WAN networks, or any combination of any or all of the foregoing.

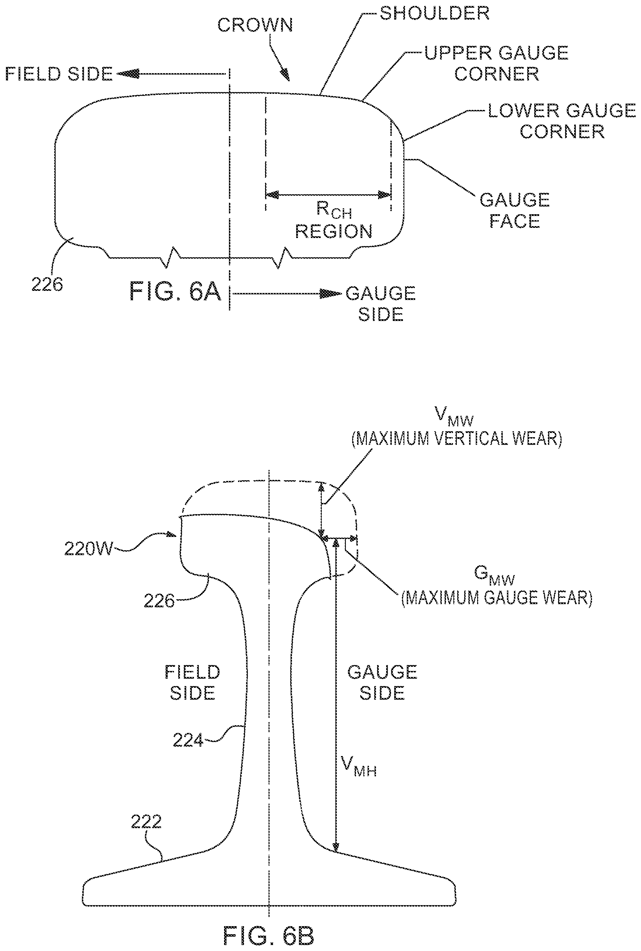

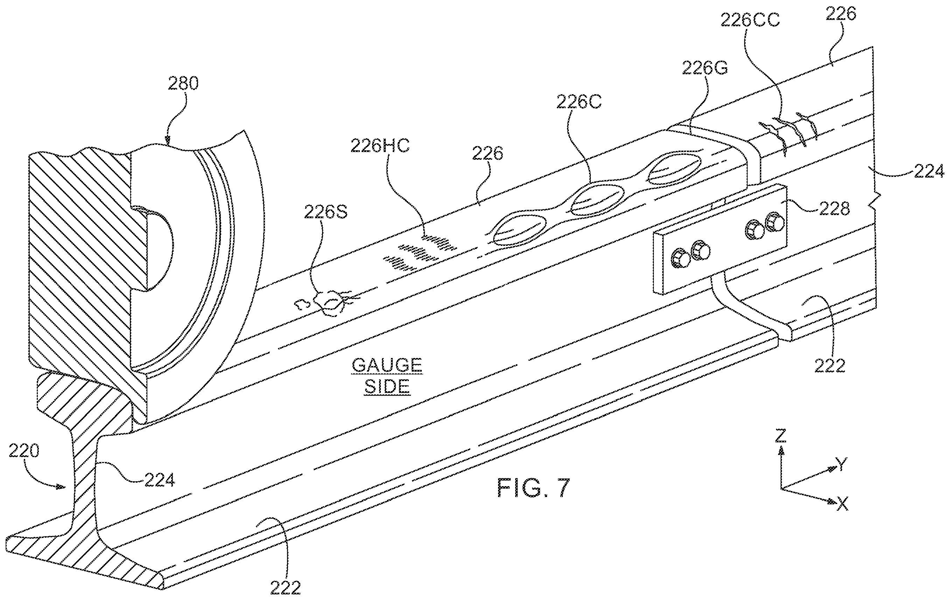

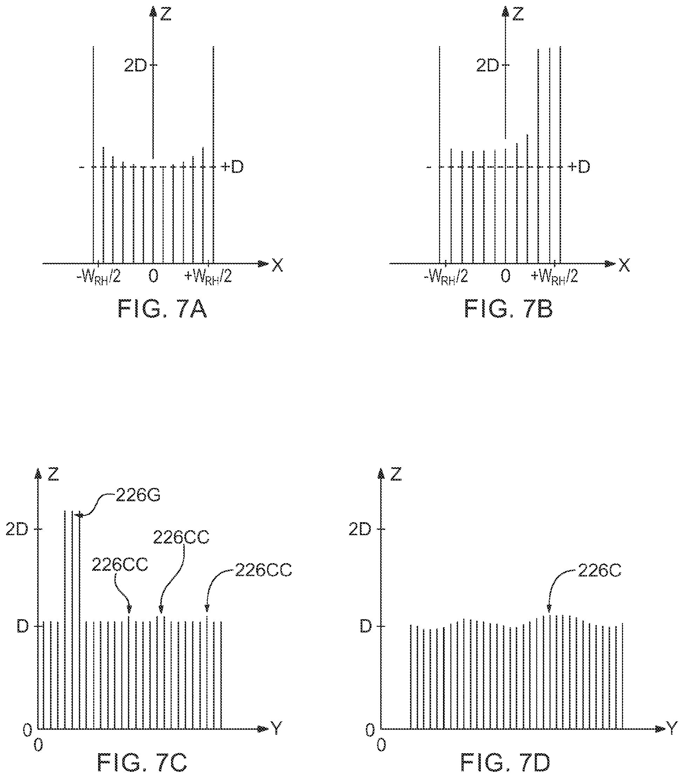

FIG. 6A is a cross-sectional view of an example rail head 226 and FIG. 6B is a cross-sectional view of an example rail 220 illustrating an example worn condition thereof; FIG. 7 is a perspective view of a length of a rail 220 illustrating examples of different rail wear conditions thereof, and FIGS. 7A through 7D illustrate various distance measurements of a rail 220. Rail nomenclature is indicated in the cross-sectional view of a nominal rail head 226 (e.g., a new or known good rail (KGR) 220), wherein, e.g., the gauge side is the side of rail 220 that faces the parallel rail 220 and the field side is the outer side that faces away from track 200, e.g., into the "fields" (likely originally farm fields) that may be alongside track 200. Track gauge T_{G} is the distance between opposing gauge faces of the two rails 220 comprising track 200.

A known good track (KGT) is, e.g., a track having two known good rails (KGR) that are spaced apart at a width that is the standard nominal track gauge TGS. Even newly constructed track may not be perfect KGT due to installation tolerances. To have a KGT in practice, e.g., for calibration of a system 100 and/or a distance measuring array 120, might require that such track be constructed with extra care using new KGR rails to avoid departures from standard nominal track dimensions, and to carefully maintain such track to close tolerance, as might be done for a section of track to be used for the calibration of track and/or rail measuring devices, and not used for other train operations.

Further, the crown of rail head 226 is the top central region on which the wheels 280 of trucks 260 ideally roll, RCH is the region of the rail head that wears and is typically cyclically stressed by passing trains, e.g., by rolling contact fatigue (RCF), and the gauge face is the vertical surface at the inside of rail head 226 to which track gauge to the gauge face of the parallel rail is measured. The effects of RCF is, e.g., typically more common on the gauge side of the outer or high side rail 220 on a curve where wear and stress from passing speeding trains is often greater.

As might be expected, rail wear is greatest along the crown and shoulder where the rolling surfaces of wheels 280 roll, and on the upper and lower gauge corners and gauge face against which the flanges of wheels make contact as the trucks 260 swivel and move side to side. Example worn rail 220W illustrates a rail that originally had a rail head outline as shown in dashed (broken) line, i.e. a known good rail (KGR), and a worn outline shown in solid line that is substantially at the limits of useful service. The maximum vertical wear VMW of the crown and shoulder of rail 220 and the maximum gauge (horizontal) wear GMW are measured with a distance of vertical height measurement VMH from the top of base 222 of rail 220 at which VMW and GMW, the maximum acceptable reductions from nominal rail head dimensions, are measured.

In instances of extreme wear as illustrated, e.g., in FIG. 6B both the crown of the rail head and the gauge side face thereof are worn to a substantial extent. As a result, stresses in the remaining rail head are substantially increased which increases the likelihood of rail failure, e.g., either a break or a partial break, that can lead to a derailment. When the gauge face wears, then the track gauge increases by the dimension of that wear, further increasing the likelihood of an out of tolerance track gauge, e.g., one requiring a more immediate response for inspection, maintenance or repair.

When the rail head 226 becomes worn to the extent of its maximum permissible vertical wear VMW and/or of its maximum permissible gauge face wear GMW and/or to the minimum vertical height VMH for the rail 220, that is an indication that the rail is at the level of wear whereat its replacement is required, e.g., as an immediate maintenance or repair priority. With the rail monitoring system 100 herein employing an array of distance measuring sensors 120 carried by railcars that regularly travel over the railway track system, such conditions rarely occur over a short period of time because geo-tagged records of measurement data are acquired and stored in the system relational database regularly, if not daily or more frequently, so that they can be monitored and tracked over time and identified as wear increases as candidates for maintenance and/or repair well before the degree of rail wear reaches the limits of VMW, VMH and/or GMW.

Some examples of defects in rails 220 detectable from measurement data produced by rail monitoring system 100 include rail surface irregularities, e.g., corrugation, rail head checks, corner cracks, spalling, flaking, etching, squats, and the like, excessive gap widths between rail sections, and rail wear. Some defects that are internal to rails 220, e.g., defects caused by impurities, manufacturing variations and the like, may manifest as an external distortion or defect that is detectable from measurement data before they produce a catastrophic rail failure, e.g., a separation or fracture.

The resolution between measurements of distance measuring sensor array 120SA in the X-Y direction depends on the distance from the sensor array 120SA to the rail head 226 and on the proximity, e.g., spacing, between the distance measuring sensors 120S that form sensor array 120S. When the sensor array 120SA is placed at an example preferred distance D of 100 mm away from the rail head 226 in the z-axis (vertical or height) direction, the resolution in the lateral or X direction (e.g., transverse to the length of rail 220) is about 2 mm (about 0.08 inch) when sensor array 120SA is configured with the offset Ox between adjacent rows of distance measuring sensors 120S is about 2 mm (about 0.08 inch), and is about 1 mm (about 0.04 inch) when sensor array 120SA is configured with the offset Ox between adjacent rows of distance measuring sensors 120S is about 1 mm (about 0.04 inch).

Resolution between measurements in the direction of travel, e.g., the Y or longitudinal direction, is dependent on the frequency of the sampling rate of the distance measuring sensors 120S and on the speed at which the distance measuring sensor array 120, e.g., the speed of the train on which distance measuring system 120 is carried, is moving along track 200. In general, a higher sampling frequency (rate) will produce proportionally more distance measurements per length of rail and therefore higher resolution and higher speed will produce proportionally fewer distance measurements per length of rail and therefore lower resolution in the Y or traveling direction. In a typical example system 120, the sampling rate of sensor array 120SA may be varied, e.g., within a range from a 100 Hz frame rate (sampling rate) to a 3,000 Hz frame rate (sampling rate) and the traveling speed of the system 120, e.g., the speed of the train carrying system 120, could vary from zero to 200 or 300 km/hour or more.

For example, at about 60 mph (about 88 feet/sec or about 100 km/hour) with distance measuring system 120 operating at a 1,000 Hz sampling rate (measurement rate), the resolution along rail 220, i.e. in the Y or traveling direction, will be about 0.088 foot (about 27 mm). The highest resolution along the rail, e.g., at a 3000 Hz measurement rate, will be about 0.029 foot (about 9 mm). A slower traveling speed will yield a proportionately higher resolution, e.g., at about 30 mph, the Y direction resolution will be about 5.5 mm (about 0.21 inch), and at about 15 mph, the Y direction resolution will be about 2.8 mm (about 0.11 inch). If distance measuring system 120 were to be operated at a higher 3,000 Hz sampling rate (measurement rate), the resolution along rail 220, i.e. in the Y direction, will increase to about 0.029 foot (about 7.5 mm) at about 60 mph. When the measurement (sampling rate is varied proportionally to speed, the resolution in the Y direction may be maintained at about the same resolution independent of speed.

It is noted that the foregoing resolution values in the Y direction along the rail are for frames of distance measuring data generated by distance measuring sensor array 120SA and that the resolution in the Y direction within each frame is 1/n of the frame resolution, where n is the number of rows of distance measuring sensors 120S in the array thereof. For example, if the sensor array 120SA has four rows of sensors 120S, then n=4 and the, e.g., 0.029 foot (about 0.35 inch or about 9 mm) resolution is actually four times greater, or about 0.007 foot (about 0.088 inch or about 2.2 mm) which is fine enough to detect small defects, e.g., defects that are not so large as to be a present danger, but which may indicate a condition to be observed over time so as to enable inspection and/or corrective action before it becomes a significant danger.

Illustrated in FIG. 7 are squats or spalling 226S, head checking 226HC, gauge corner cracks 226HC, corrugation 226C and a section gap 226G. Sections of rail 220, e.g., 12 or 24 m (about 39 ft. or 78 ft.) long in the US or 20 m (about 66 ft.) long in the UK, may be joined by perforated steel plates 228 (known as fishplates (UK) or as joint bars (US & CA)) thereby creating short gaps between rail sections, or rail sections may be welded together end-to-end so as to form long continuous rails.

The foregoing physical defects may be benign while relatively small, however, they become of more concern as they grow larger. The US Department of Transportation, Federal Railroad Administration, Track Inspector Rail Defect Inspection Manual, Revision 2, July 2015, indicates that certain defects can grow to be a substantial size, e.g., up to 3/8 inch (about 9.6 mm) or about 15%-50% of rail cross-sectional area, before rail failure occurs, and so the distance vertical resolution of 0.1 mm of the example distance measuring sensor 120S and the about 7.5-15 mm longitudinal spacing of the array representations of rail head 226 (at 60 mph and 120 mph) is more than sufficient to detect such defects while they are still relatively small, i.e. well before they indicate or become a danger of rail failure.

In the present example embodiment, such wear and defects can be detected early while they are still relatively small because the resolution of the example distance measuring sensors 120S is about 0.1 mm (about 0.004 inch) in the vertical or z direction, which is much finer than the dimension of such defects when they reach a depth that could pose a danger of rail failure. This facilitates monitoring the stability of and/or changes in the size of wear and defects over time so as to identify, plan for and initiate maintenance and/or repairs thereto well before a substantial danger of failure arises.

Likewise, the distance resolution of an example embodiment of distance measuring sensor array 120SA at rail 220 in the width or crosswise (x) direction, e.g., typically about 2 mm (about 0.08 inch), and in the longitudinal (y) direction, e.g., typically about 9 mm (about 0.35 inch), is sufficiently fine to identify wear and defects, e.g., squats and spalling 226S, head checking 226HC, gauge corner cracks 226HC, corrugation 226C and section gap 226G, when they are too small to present a significant risk of rail failure, and to monitor the stability of and/or changes in the size of such wear and defects over time so as to identify, plan for and initiate maintenance and/or repairs thereto well before a substantial danger of failure arises.

Corrugations may have a wavelength along the rail 220 of about 1"-3" (about 25-75 mm) or as long as 3"-24" (about 73-600 mm) which are easily detected by comparing successive representations of rail head 226, e.g., in the vertical or z direction, that are obtained over a length of the rail, e.g., in the longitudinal or y direction, that exceeds the wavelength of the corrugation. The width of the corrugation at its deepest point is typically significantly greater than at its shallowest point, and so the present distance measuring system 100 can easily detect corrugations from their differences in height (z direction) measurement and/or width (x direction) measurement.

It is noted that other defects in a rail, whether a surface defect or a broken rail, can be determined from the present arrangement where they present as substantial differences in the height of a rail or its transverse position that occur over a relatively short distance along the rail. Broken rails often subside vertically to a greater extent on one side of a break therein than on the other side thereof and/or are displaced transversely (horizontally) from one another at a break.

In the examples of FIGS. 7A through 7D which illustrate various distance measurements from a sensor array 120SA to a rail 220. In the example illustrated, the distance D between the crown of the rail and the sensor array 120SA is, e.g., about 100 mm, and an example KGR represented therein has a rail head width WRH of about 70 mm and a height of about 140 mm. Thus, the range of distance measurements in the vertical or Z direction will typically exceed about 2D (in the present example) and the field of view when centered on the rail head will extend horizontally in the X direction for a distance of more than half the width of the rail head or WRH/2 on each side of the centerline.

FIG. 7A is a representation of an example of measurement data provided by one row of distance measuring sensors 120S of a sensor array 120SA in the crosswise or X direction for a substantially known good rail (KGR) 220. Therein the measured distance to the crown or top of the rail head 226 is about 100 mm and it increases gradually as the distance measured is to a point on the rail head 226 that is on either side of the center of the rail head. Any sensor 120S that does not have the rail head 226 in its field of view will measure all the way down to the base 222 of the rail 220 and so that measurement is dramatically greater than the measurements to the rail head thereby to indicate where the sides of the rail head are, from which the width WRH of the rail head may be determined.

FIG. 7B is a representation of an example of measurement data provided by the one row of distance measuring sensors 120S of a sensor array 120SA in the crosswise or X direction for a substantially worn rail 220, e.g., a rail as in FIG. 6B. Therein the measured distance to the crown or top of the rail head 226 is greater than D, e.g., with D of about 100 mm, due to rail wear and it increases further as the distance measured is to a point of greater wear on the rail head 226 that is, e.g., on the gauge side of the center of the rail head. Because the gauge side of the rail head is substantially worn in this example, a greater number of sensors 120S do not have the rail head 226 in their field of view and so measure all the way down to the base 222 of the rail 220, a measurement that is dramatically greater than the measurements to the rail head thereby to indicate where the sides of the rail head are, from which the substantially reduced width WRH of the highly worn rail head may be determined. Thus, differences in the measured distance from sensor array 120SA to the rail head 226 from that to a KGR rail may be processed to determine and quantify rail wear as well as identify and quantify various different kinds of excess wear and/or rail defects.

FIGS. 7C and 7D are representations of an example series of measurement data provided by one column of distance measuring sensors 120S of a sensor array 120SA in the lengthwise or Y direction along the rail 220 for rails 220 that have developed various kinds of wear and/or defects, e.g., a rail as in FIG. 7. Therein the measured distance to the crown or top of the rail head 226 is greater than about 100 mm due to rail wear and it increases further as the distance measured is to a point of greater wear and/or defect of the rail 220. Rail wear and defects may be identified and quantified by processing such measurement data. For relative scale, the distance measurements illustrated in FIG. 7C are representative of a relatively short distance along rail 220, e.g., perhaps one or two tenths of a meter, while the distance measurements illustrated in FIG. 7D are representative of a relatively longer distance along rail 220, e.g., perhaps one half or two meters.

A gap 226G between lengths of rail 220 is indicated in FIG. 7C by a series of much greater measured distances, e.g., down to the base 222 of the rail 220 or even to the rail bed 205 on the gauge side of the center of the rail head, from a series of distance measurements made along the rail as the rail car 250 on which distance monitoring system 100 is carried. Further, distance measurement data from plural columns of sensors 120S can be processed to determine whether the gap is, e.g., a gap 226G between lengths of rail 220 which is regular and substantially perpendicularly transverse to the length of rail 220 or is a broken or fractured rail 220 wherein the break is likely irregular and unlikely to be purely transverse.

In addition, several corner cracks 226CC in rail 220 as illustrated in FIG. 7 are represented in FIG. 7C by groups of one or more adjacent distance measurements made along rail 220 having slightly greater distances 226CC from sensor array 120SA which can be processed to identify corner cracks 226CC and to quantify their magnitude and severity. Similarly, rail head corrugation 226C in rail 220 as illustrated in FIG. 7 is represented in FIG. 7D by a sequence of distance measurements made along rail 220 having distances 226CC from sensor array 120SA that undulate, e.g., reflect the physical corrugation, in distance with some measure of periodic regularity, at least over a short distance, which can be processed to identify corrugation 226C and to quantify its magnitude and severity. Moreover, distance measurement data from adjacent columns of distance measuring sensors 120S may be processed to additionally identify and quantify the width of the corrugations.

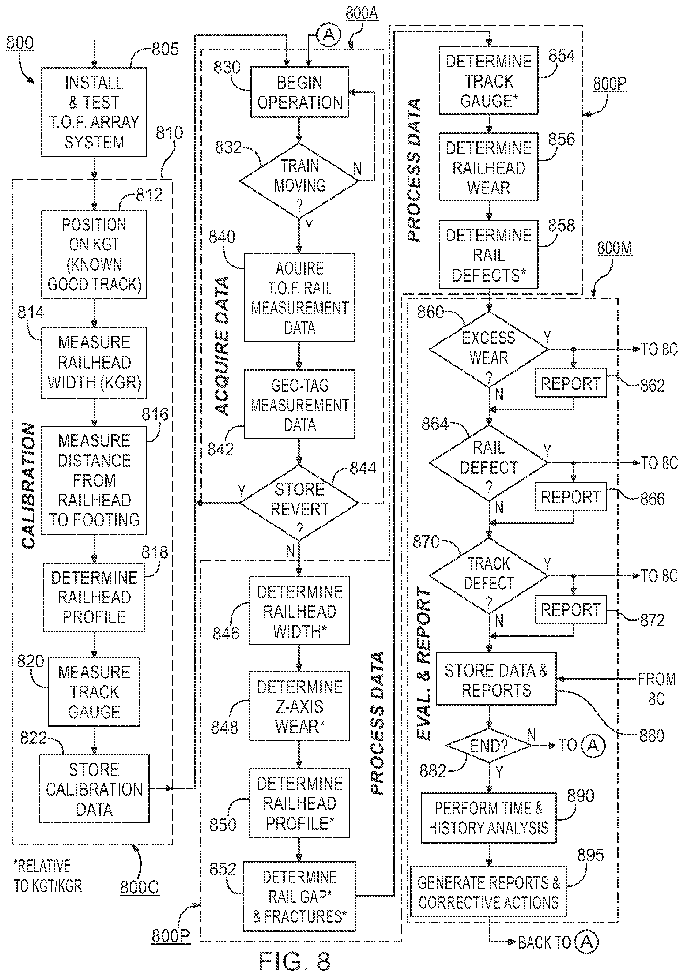

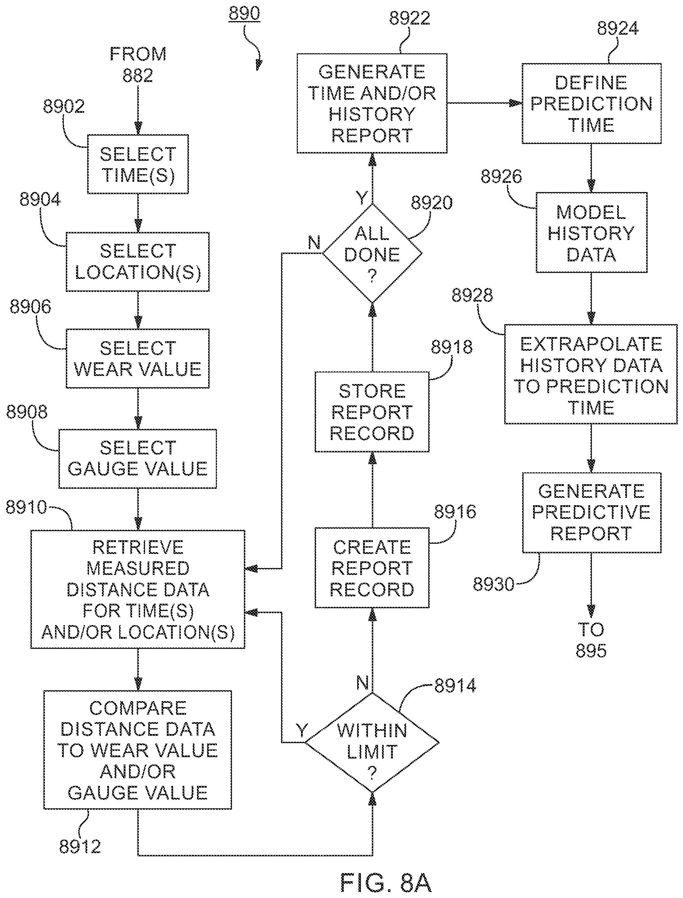

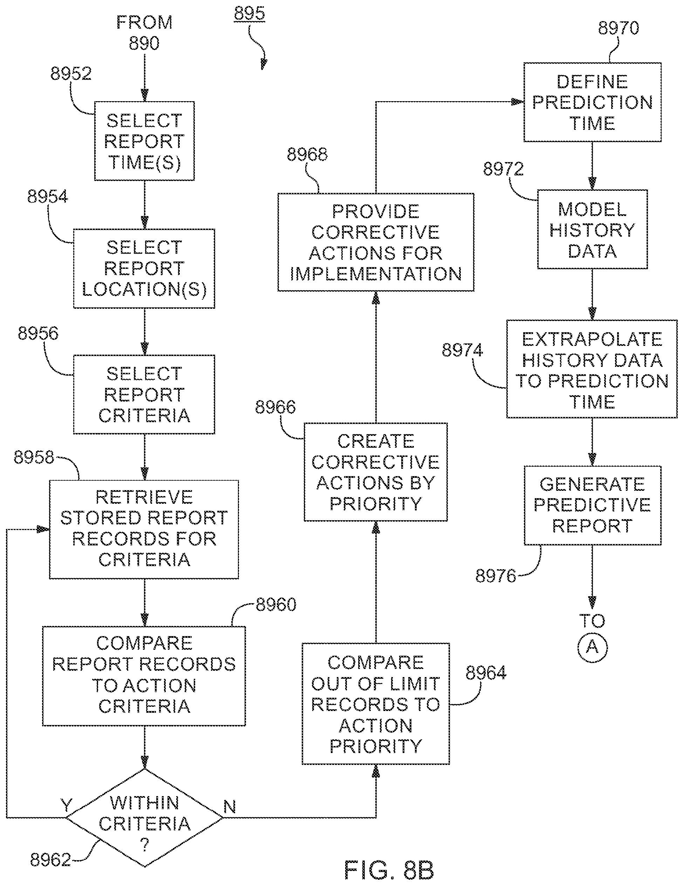

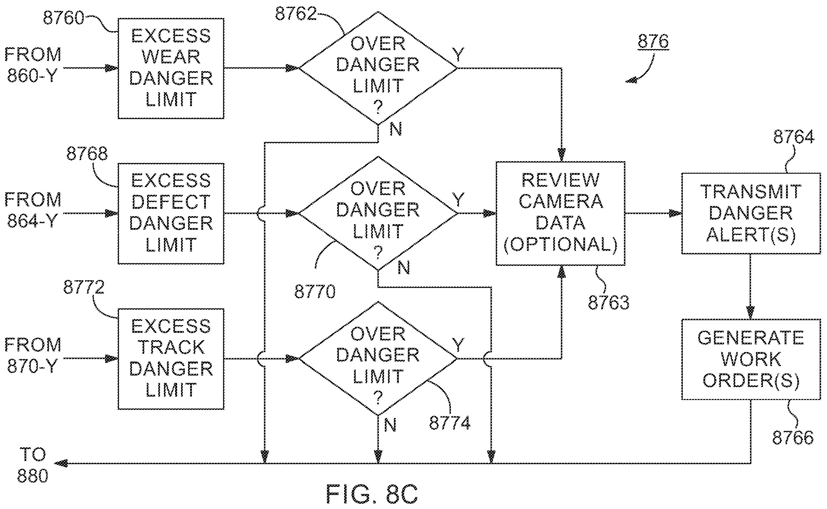

FIG. 8 is a schematic flow diagram illustrating an example method or process 800 performed by the example rail monitoring system 100 described herein, and FIGS 8A, 8B and 8C are schematic flow diagrams illustrating details of certain features thereof. Example process 800 typically begins with obtaining and installing 805 of a TOF distance measuring system 100 on railcar 250. In general, process 800 includes calibrating 800C system 100, operating system 100 to acquire 800A distance measurement data by measuring distances using, e.g., an array of TOF devices, by processing 800P the acquired measurement data to determine the measurements of the track and rail from which rail wear and defects can be determined, and performing management 800M of a railway system by, e.g., identifying excesses in wear and defects, generating reports thereof, analyzing such data to determine changes, trends and/or historical characteristics, generating reports therefrom, identifying and initiating corrective actions, such as inspections, maintenance, repairs, replacement and the like.

Storing of data, whether as acquired or as partly and completely processed, may occur at any one or more places and/or times in process 800 as may be convenient and desirable, and preferably is stored at different stages in the acquisition, processing and evaluation thereof. Similarly, the foregoing aspects 800A, 800P, 800M of process 800 may be performed in whole or in part in different order and/or sequences as may be convenient and/or desirable for a particular railway or management arrangements.

Preferably distance measurement data is geo-tagged as it is acquired and the location data and time data associated therewith remains associated with both the distance data as acquired and as it is at various stages of being processed, thereby facilitating the analysis of both raw and processed distance measurement data with respect to location, time, magnitude, trends, degree of wear, presence and/or absence of defects, and the like.

In more detail, example process 800 begins with the obtaining and installing 805 of a TOF distance measuring system 100, e.g., one or more arrays of distance measuring sensors 120 and associated equipment, on a rail car. Calibration 810 of the system 100 follows, preferably employing a physical embodiment of known good rails (KGRs) arranged in a known good track (KGT) configuration, or another arrangement through which calibration 801 of system 100 may be obtained.

While the order of certain steps of process 800 should be performed in a predetermined order, e.g., installing 805 and calibrating 810 system 100 should precede operating system 100, and acquiring 840 distance measurement data will precede processing 842 *et seq.* such data, most of the steps in the illustrated example embodiment can and often will be performed in a different order and/or may be performed in parallel. Further, to some extent, whether process 800 is configured to process distance measurement data using processor 140 on railcar 250, e.g., possibly as the data is acquired and stored, or to process distance measurement data using remote processor 170, e.g., possibly as the data is acquired and transmitted to processor 170 or at a later time, or some combination thereof, the sequence and timing of the various steps involving such processors will vary accordingly.

Calibrating 810 system 100 includes positioning 812 the distance measuring system 100, now on a railcar, on a known good track (KGT) which includes known good rails (KGR) which together serve as a reference or standard against which distance measuring systems 100 are calibrated. The length of the calibration standard KGT track may be short, e.g., just long enough to receive the railcar on which system 100 is mounted, as may be sufficient to perform a stationary calibration, to or may be of sufficient length to allow calibration while railcar 250 is in motion, e.g., at one or more predetermined speeds, although maintenance of the length of KGT may require more maintenance to keep it within the standards for a KGR.

Calibrating 810 includes measuring the width 814 of the KGR rail head, measuring 816 the distance from the crown of the rail head 226 to the base 222 of the rail 220 at the edge of rail head 226, and determining 818 the profile of the rail head, e.g., the transverse shape of the crown and out to the edges thereof. From the foregoing measurements 812-818 the actual distance D from the array of distance measuring sensors 120SA to the crown of KGR 220 can be determined, and that distance D can be corrected to the predetermined value thereof, e.g., by processing the measurement data to determine a distance D calibration correction value or by adjusting the physical position of system 100 on railcar 250 such that physical distance D is the predetermined nominal distance, e.g., 100 mm. The former is less burdensome and is easily factored into the processing of subsequent measurement data, e.g., for determining rail wear.

Where two sensor arrays 120SA are provided, the distance between them is fixed by their physical mounting, e.g., to an unsprung part of railcar 250, and the respective positions of the gauge side edges of rail heads 226 in the transverse or X direction within their respective fields of view can easily be processed to measure and calibrate 820 the track gauge from the KGT. Adjustment for any unwanted deviation from nominal can be removed via calculation factor or repositioning one or both arrays 120SA as above.

All of the measurement data is processed and stored 822, e.g., to determine calibration correction factors, e.g., as a constant and/or as a coefficient, for the subsequent processing of distance measuring data. Such calibration corrections are preferably geo-tagged, e.g., with location data on the KGT calibration track and the date and time such data was acquired, thereby preserving a calibration record which may be stored in the memory 144 associated with processor 140 on railcar 250 and/or in the memory 174 associated with a remote processor 170.

Following calibration 810, operation 830 of calibrated system 100 begins 830. Preferably, system 100 only acquires measurement data as the railcar is moving so as to not generate redundant data that would merely consume memory and processor capacity. In operation, whether the train is moving 832 is tested and if not 832-N, process 800 recycles to step 830 repeatedly until movement of railcar 250 is detected 832-Y. Once operation commences, distance measurement data is acquired and processed 840-895. It is preferred, however, that the rate at which sensor array 120SA samples to acquire and measure distance data is variable in a predetermined manner, e.g., proportional to the operating speed of railcar 250, so as to avoid multiple measurement of the same areas of rail head 226 and the acquiring and processing redundant data.

Operation next proceeds to the measuring 840-844 of distance measurement data. Sensor array 120SA acquires 840 distance measuring data for rail 220, e.g., by time of flight distance measurement, and the distance measurement data is geo-tagged 842, e.g., is associated with location data for the location at which such data was acquired and the date and time thereof. The geo-tagged measurement data is stored 844, e.g., at least in the memory 144 associated with the processor 140, and if operation is set to an mode wherein data is acquired 840 and stored 842 in real time and is to be processed at a later time, then revert 842-Y is followed for recycling of the measurement data acquisition 830-844 is repeated during the ongoing travel of railcar 250. If some level of relatively immediate processing of the measurement data is desired or if the mode having delayed processing is not selected, then operation does not revert 844-N and proceeds to processing 846-880 of the measurement data.

The geo-tagged distance measurement data is processed to determine 846 the width of the rail head 226, to determine 848 the rail wear in the Z direction, to determine 850 the rail head 226 profile, e.g., rail wear profile across the width of the rail head 226, to determine 852 whether there is a gap and/or fracture in the rail 220, to determine 854 the track gauge (if a system 100 having two sensor arrays 120SA is provided), to determine 856 rail head wear within or outside of limits, and to determine 858 whether any rail defects is present. Such measurement data and determinations 846-858 can be stored at this point or later, e.g., step 880.

The measurement data and determinations 846-858 can be and preferably are processed to determine 860-872 whether or not reportable conditions, e.g., wear and/or defects, have been determined. The measurement data is processed 860 to determine whether excess wear, e.g., wear outside of allowable tolerances, is present. If it is 860Y, a report 862 thereof is generated and process 800 continues; if not 869-N, process 800 continues.

The measurement data is processed 860 to determine whether excess wear, e.g., wear outside of allowable tolerances, indicating a need for inspection, maintenance and/or repair, , is present. If the wear is excessive 860-Y, a report 862 thereof is generated and process 800 continues; if not 860-N, process 800 continues.

The measurement data is processed 864 to determine whether a rail defect, e.g., corner cracks, spalling, gaps, fractures, corrugations and the like that exceed allowable tolerances, indicating a need for inspection, maintenance and/or repair, is present. If the defect(s) is excessive 864-Y, a report 866 thereof is generated and process 800 continues; if not 864-N, process 800 continues.

The measurement data is processed 870 to determine whether a track defect, e.g., a configurational condition that is outside of allowable tolerances, e.g., gauge widening indicating a need for inspection, maintenance and/or repair, is present. If the gauge widening is excessive 870-Y, a report 872 thereof is generated and process 800 continues; if not 870-N, process 800 continues.

If excess wear 860-Y, excess defects 864-Y and/or 870-Y are present, then the indications thereof may be further processed 876 for providing real-time determination and alerts where there are exceptions, e.g., conditions sufficiently in excess of acceptable limits that an alert and/or work order should quickly and/or immediately be generated so that the excessive condition can be dealt with expeditiously, e.g., before it results in a dangerous condition, derailment and/or other accident, and/or damage to persons or property, as described below.

The geo-tagged distance measurement data, the processed distance measuring data and/or any reports generated are stored 880, preferably in a database from which they can easily be retrieved using one or more search conditions and/or combinations thereof. Relational databases are one kind of databases that typically are suitable for storing and retrieving such data. The foregoing processing 846-880 may continue 882-N whereupon process 800 returns to step 830 and continues operating as described, until the criteria for ending operation is reached, e.g., railcar 250 has reached a stopping point or the end of its runs for the day or other time period.

If process 810-880 is to be ended 882-Y at this juncture, process 800 can proceed to perform 890 various analyses of the stored distance measurement data, e.g., analysis by time and/or history and/or analysis by location, to determine 890 the condition of rails 220 and track 200, and the rates at which the condition of rails 220 and/or track 200 are changing. Such freedom to perform varying analyses enables the railway operator, manager and/or owner, or a government or other oversight or investigatory agency, to monitor rail and track conditions as often as they determined to be necessary or desirable, and to quickly and accurately locate conditions that should be addressed by inspection, maintenance and/or repair, and the timing of such actions, and to do so in view of the severity of an abnormal condition and/or defect, and to even restrict operations and/or to shut down a track or line when excess wear and/or defects make continuing operations too dangerous.

Because each representation of a rail embodied in distance measurement data from the array of distance measuring sensors 120SA is geo-tagged, i.e. each has associated with it the location at which the measurement data was acquired and the time (e.g., date and time) at which it was acquired, not only may rail wear and defects at a particular location and time be determined from distance measurement data, but rail condition may be evaluated over a particular length of track and/or over a particular length of time, e.g., by selecting records from the relational database of distance measurement data according to track, section, locations, time periods and the like, thereby to assist in management of the frequency and timing and/or extent of rail and track inspections, maintenance and repair that a railway related entity may desire or need.

This capability may be automated by comparing individual database records of measurement data with acceptance criteria, e.g., limits within which the elements of such measurement data must be, when such data is stored or at one or more predetermined times thereafter. The capability may also be automated by comparing measurement data meeting predetermined record searching criteria, e.g., of time, location, track, line and the like, to specified acceptance criteria for determining differences and trends therein that may affect, e.g., railway operation, inspection, maintenance and repair of tracks and rails.

FIGS. 8A and 8B are schematic flow diagrams illustrating details of example features 890 and 895 of the example method 800 illustrated in FIG. 8. Process or method step 890 of process or method 800 illustrates example details for preparing time and/or history reports and for generating predictive reports, e.g., reports that predict into the future rail wear, defects and track condition. Process 890 may commence from step 882 of process 800. Selection criteria are selected 8902, 8904, 8906, 8908 for controlling which data records in the \relational database are to be within the scope of the search, processing and analysis, the order of doing so being immaterial.

Step 8902 includes selecting 8902 the time or times, e.g., particular times or a range of times, at or over which distance measurement data is to be processed and evaluated. Step 8904 includes selecting 8904 the location or locations, e.g., particular locations or a range of locations, at or over which distance measurement data is to be processed and evaluated. Step 8906 includes selecting 8906 the wear value or values, e.g., particular values or a range of values, at or against which distance measurement data is to be processed and compared to identify and determine rail wear and rail defects. Step 8908 includes selecting 8908 the value or values or track gauge, e.g., particular values or a range of values, at or against which distance measurement data for track gauge, e.g., the distance between the inside edges of the rail heads 226 of track 220, is to be processed and compared to identify and determine track gauge, e.g., where sensor arrays 120SA are provided for measuring such distance between the rails.

Process 890 continues by retrieving 8910 from the relational database measured distance data for the selected 8902, 8904 time(s) and/or location(s) and by comparing 8912 the retrieved distance measurement data to the selected 8906 rail wear and/or defect values and/or the selected 8908 track gauge value. If 8914 the retrieved rail wear and/or defect and/or track gauge values are within the limits of the selected 8906 rail wear and defect value and the selected 8908 track gauge value then the process 890 repeats 8914-Y steps 8910, 8912 until the retrievals 8910 and comparisons 8912 meeting the search criteria are retrieved ed and compared. If 8914 any of the retrieved rail wear and/or defect and/or track gauge values are not within the limits of the selected 8906 rail wear and defect value and the selected 8908 track gauge value then the process 890 continues by creating 8916 a report record for the out of limit condition and stores 8918 that report record in the relational database, e.g., in a report section thereof if the database is so configured.

When 8920 all of the records meeting the selection criteria have been retrieved 8910 and compared 8912, and report records created 8916 and stored 8916, then 8920-Y a time and/or history report for all of the report records is generated 8922. If 8920 not, then 8920-N further retrieval 88910 and comparisons 8912 are performed until all are completed. Process 890 may return to step 895 of process 800, if desired.

However, if further processing of the retrieved measurement data is desired, process 890 proceeds to the user defining 8924 a prediction time over which predictive analysis 8926, 8928, 8930 may be performed. The history data, e.g., the out of limit report records, are analyzed to model 8926 the changes and trends of the history data therein, e.g., using a regression, curve fitting or other modeling tool or method. The history data 8922 is then processed using the model 8926 thereof to extend or extrapolate 8928 the history data forward in time to the predictive time, e.g., a time in the future, based upon the presumption that future wear, defects and gauge widening continues at the rates seen in the history data thereof, which is typically a valid presumption. Predictive report(s) are generated 8930 before process 890 returns to step 895 of process 800.

As a result, the history of the development and/or increase in rail wear, rail defects, e.g., the size and/or number thereof, and/or track gauge changes, e.g., gauge widening, for predicting what the values thereof are likely to become in the future, which enables the predictive data to inform planning and implementation of inspection, maintenance and/or repair and/or replacement of the affected rail and/or track. Because location is part of the selection criteria for process 890, locations known to or expected to experience higher rates of wear and/or defects and/or track widening can easily be monitored, e.g., on a more frequent basis and/or with different wear and/or defect selection criteria. In addition, any deviations from historical patterns and/or trends may be indicative of an unexpected condition or rail/track failure that should be attended to on a more urgent than normal basis.

Process or method step 895 of process or method 800 illustrates example details for preparing reports and corrective actions and for generating predictive reports thereof, e.g., reports that predict into the future rail wear, defects and track condition needing corrective action to be taken. Process 895 may commence from step 890 of process 800 with selection 8952 of a time or times and selection 8954 of a location or locations which are to be included in process 895, and the selection 8956 of the criteria to be applied by process 895. Reporting criteria can be, e.g., levels or thresholds of wear, defects and/or gauge widening, or other conditions, that are of sufficient gravity that there is an imminent need to address those conditions that meet or exceed the threshold criteria.

Using the search criteria, e.g., the selected time(s), location(s) and criteria, process 895 retrieves 8958 the ones of the stored records whose geo-tagged distance measurement data meet the search criteria and compares 8960 the retrieved report records to the action criteria. If 8962 the data of the record is within the allowable criteria, e.g., is not an imminent need, then 8962-Y process 895 returns to step 8958 to retrieve additional records for comparison. If 8962 the data of the record is not within the allowable criteria, e.g., is an imminent need, then 8962-N process 895 proceeds to step 8964.

Therein comparing 8964 the distance measurement data contained in the retrieved records that are out of the limits (criteria) of acceptability to various thresholds representing levels of priority for actions, e.g., corrective actions, to be taken, with e.g., those presenting a greater risk or danger being given higher priority for corrective action. From those comparisons 8964 corrective action directives or orders are created 8966 with appropriate respective priorities for implementation. In general, the larger the deviation from acceptable levels of wear, defects and/or gauge widening, the higher the priority and the shorter the time scheduled for such action to be taken.

Corrective action directives or orders are provided 8968, e.g., generated, for implementation according to their respective priorities. Corrective actions provided 8968 could include, e.g., inspection, maintenance, correction, repair, replacement, reconstruction and the like, in accordance with various time schedules and deadlines, including e.g., immediately, within a specified number of days weeks or months, and could at the extremes range from the least urgent, e.g., monitor in the future, to the most urgent, e.g., reduce speed and/or close the track until the action is completed. While system 100 is configured to have the capability to produce 8968 these corrective actions and to issue the necessary orders automatically, it may be desirable to interpose a human review as part of the providing 8968 step, e.g., as oversight and/or verification thereof.

To the extent thus far described, process 895 is to some extent largely a reactive process, e.g., it reacts to the accumulated geo-tagged distance measurement data that has been acquired and stored in the system memories, e.g., in one or more relational databases, through measured system to rail distances provided by systems 100 carried on scheduled or selected trains traveling along a system of tracks and through scheduled, preprogrammed and/or manual searches of those records. That capability is believed to exceed what is presently available through prior art systems, however, system 100 can be employed to predict future conditions and needs for inspection, maintenance, repair and the like.

However, if further processing of the retrieved geo-tagged measurement data is desired, process 895 proceeds to the user defining 8970 a prediction time over which predictive analysis 8972, 8974, 8976 may be performed. The history data, e.g., the out of limit report records requiring action 8966, 8968, are analyzed to model 8972 the changes and trends of the history data therein, e.g., using a regression, curve fitting or other modeling tool or method. The history data 8966, 8968 is then processed using the model 8972 thereof to extend or extrapolate 8974 the history data forward in time to the predictive time, e.g., a time in the future, based upon the presumption that future wear, defects and gauge widening continues at the rates seen in the history data thereof, which is typically a valid presumption. Predictive report(s) are generated 8930 before process 895 returns to "A" which is step 830 of process 800.

As a result, the history of the development and/or increase in rail wear, rail defects, e.g., the size and/or number thereof, and/or track gauge changes, e.g., gauge widening, that exceeds acceptable limits, e.g., safe limits, for predicting what the values thereof are likely to become in the future, which enables the predictive data to inform planning, prioritizing and/or implementation of corrective actions for inspection, maintenance and/or repair and/or replacement of the affected rail and/or track. Because selection 8954 of location is part of the selection criteria for process 895, locations known to or expected to experience higher rates of wear and/or defects and/or track widening can easily be monitored, e.g., on a more frequent basis and/or with different wear and/or defect selection criteria. In addition, any deviations from historical patterns and/or trends may be indicative of an unexpected condition or rail/track failure, e.g., a deterioration or failure of the ballast or base 205 of a track that should be attended to on a more urgent than normal basis.

FIG. 8C is a schematic flow diagram illustrating details of another example feature 876 of the example method 800 of FIG. 8. As described, system 100 and method 800 can be operated in either a "real time" or delayed processing manner. In operating in a delayed processing manner, system 100 may measure and accumulate distance measurement data during operation of the railcar that carries system 100, 120 and may transmit that data to a remote site either as it is collected, at the completion of a run or a day's operation, or using another time basis.

Processing of the geo-tagged distance measurement data beyond it being geo-tagged and stored as it is acquired by processor 140 may be performed by the processor 140 of system 100 carried on the railcar, or by the processor 170 at the remote site, or by both processors 140, 170, and either processor 140 and/or 170 may perform that processing as data is received, e.g., in "real time" or at a later time. In such instance the acquired data and/or the processed data may, to whatever extent desired, be provided to a user, e.g., a railway operator or manager, or a rail maintenance and/or repair organization, and/or to operating personnel, via output device 180 or via output device 180' on the railcar.

Process 876 illustrates an example of one part of process 800 for operating in real time to determine when excessive wear and/or defect and/or widening is measured and generating alerts and/or work orders responsive thereto also in real time. Process 876 may be performed by processor 140 on the railcar carrying system 100, 120 and transmitted 180' directly therefrom to a user or users who can act on such alerts and/or work orders. Example process 876 monitors the evaluation and reporting part of process 800 wherein excess wear 860, rail defect 864 and track defects 870 are determined 860-Y, 864-Y, 870-Y to further monitor and evaluate those conditions for levels of wear, defect and/or widening that presents a more immediate danger. This is the earliest place in process 800 whereat an excessive wear and/or defect is determined to exist, whether process 800 is performed with the example order of steps illustrated or with steps thereof being performed in a different order.

Danger limits defined 8760, 8768, 8772 for levels of excess wear 860, rail defect 864 and track defects 870 are established and represent conditions where more rapid, if not immediate, corrective action should be initiated. Excesses determined 860-Y, 864-Y, 870-Y in process 800 are respectively compared 8762, 8770, 8774, e.g., in real time, with the respective defined danger limit corresponding therewith. For any of those conditions that are not over or in excess of the respective defined danger limit, process 876 follows negative comparison output 8762-N, 8770-N, 8774-N, to return to process 800, e.g., at step 880.

When, however, any of those conditions are over or in excess of a defined danger limit, process 876 follows positive comparison output 8762-Y, 8770-Y, 8774-Y, to transmitting 8764 a danger alert, e.g., either to the managers and/or operators of the railway or to those who inspect, maintain and/or repair the tracks thereof. System 100, 120 also generates 8766 one or more work orders to initiate whatever corrective action is necessary and appropriate for responding to the wear and/or defect condition in excess of the danger limit determined to exist. It is noted that the steps 8760 through 8766 are not only performed in real time to address potentially dangerous conditions, but because the distance measurement data is geo-tagged, process 876 can immediately be directed to the exact location whereat such condition was determined to exist.

Optionally, a camera 120V may be provided that views the rails that are being monitored by the distance measuring sensor arrays 120SA of system 100, 120 to provide visual data that is geo-tagged with the same location data and time data that also geo-tags the distance measurement data produced by system 100, 120. Accordingly, that common geo-tagging data enables the visual data to be correlated by location and time with the corresponding distance measurement data. Process 876 optionally provides for reviewing 8763 such visual data for confirming the conditions determined to be excessively dangerous 8762, 8770, 8774 by processing of distance measurement data performed by system 100. Typically, a human with suitable training and experience will perform the reviewing 8763 of the visual data and may make appropriate additions, deletions and changes to the work orders produced 8766 by system 100.

It is noted that any or all of the foregoing monitoring and evaluation processes may be automated, scheduled and/or programmed, to be performed at one or more predetermined times, at regular times, at varying or irregular times, for different locations, for locations having similarities, e.g., high speed curves, for different wear, defect and widening values, and the like, as may be deemed necessary or advisable under the circumstances.

As used herein, the term "about" means that dimensions, sizes, formulations, parameters, shapes and other quantities and characteristics are not and need not be exact, but may be approximate and/or larger or smaller, as desired, reflecting tolerances, conversion factors, rounding off, measurement error and the like, and other factors known to those of skill in the art. In general, a dimension, size, formulation, parameter, shape or other quantity or characteristic is "about" or "approximate"whether or not expressly stated to be such. It is noted that embodiments of very different sizes, shapes and dimensions may employ the described arrangements.

Although terms such as "front," "back," "rear," "side," "end," "top," "bottom," "up," "down," "left," "right," "upward," "downward," "forward," "backward," "under" and/or "over," "vertical," "horizontal," and the like may be used herein as a convenience in describing one or more embodiments and/or uses of the present arrangement, the articles described may be positioned in any desired orientation and/or may be utilized in any desired position and/or orientation. Such terms of position and/or orientation should be understood as being for convenience only, and not as limiting of the invention as claimed.

As used herein, the term "and/or" encompasses both the conjunctive and the disjunctive cases, so that a phrase in the form "A and/or B" encompasses "A" or "B" or "A and B" and a phrase in the form "A, B and/or C" includes "A," "B," "C," "A and B," "A and C," "B and C," and "A and B and C."

In addition, the term "at least one of" one or more elements is intended to include one of any one of the elements, more than one of any of the elements, and two or more of the elements up to and including all of the elements, and so, e.g., phrases in the form "at least one of A, B and C" include "A," "B," "C," "A and B," "A and C," "B and C," and "A and B and C."

As used herein, the term "predetermined" means determined in advance or before hand with respect to whatever the term pertains to. Either term may be used with respect to a physical object or thing and/or with respect to an intangible thing, e.g., a signal or data, and the like. Examples thereof may include a fixed value, position, condition and/or limit, however, predetermined is not limited to a fixed value, position, condition and/or limit. A predetermined value, position, condition and/or limit may change or otherwise vary over time, over a sequence and/or over other conditions, series of values, positions, and/or limits.

As used herein, the term "plurality" means plural, two or greater in number of whatever the term pertains to, i.e. more than one. The term may be used with respect to a physical object or thing and/or with respect to an intangible thing, e.g., a signal or data, and the like. Examples thereof may include a fixed or movable thing, a fixed value, a changeable value, position, condition and/or limit, and the like.

While various operations, steps and/or elements of a process or method or operation may be described in an order or sequence, the operations, steps and/or elements do not need to be performed in that order or sequence, or in any particular order or sequence, unless expressly stated to require a particular order or sequence.

As used herein, the terms "connected" and "coupled" as well as variations thereof may or may not be intended to be exact synonyms, but may also encompass some similar things and some different things. The term "connected" as indicated by its context may be used generally to refer to elements that have a direct electrical and/or physical contact to each other, whereas the term "coupled" as indicated by its context may be used generally to refer to elements that have an indirect electrical and/or physical contact with each other, e.g., via one or more intermediate elements, so as to cooperate and/or interact with each other, and may include elements in direct contact as well.

The present arrangement can be and preferably is at least in part embodied as a computer implemented process or processes and/or apparatus for performing such computer-implemented process or processes, and can also be embodied in the form of a tangible medium containing a non-transitory computer program or other machine-readable instructions (herein "computer program"), wherein when the computer program is loaded into a computer or other processor (herein "computer") and/or is executed by the computer, the computer becomes an apparatus for practicing the process or processes. Storage media for containing such computer program include, for example, floppy disks and diskettes, compact disk (CD)-ROMs (whether or not writeable), DVD digital disks, RAM and ROM memories, computer hard drives and back-up drives, external hard drives, "thumb" drives, and any other non-transitory storage medium readable by a computer. The process or processes can also be embodied in the form of a computer program, for example, whether stored in a storage medium or transmitted over a transmission medium such as electrical conductors, fiber optics or other light conductors, or by electromagnetic radiation, wherein when the computer program is loaded into a computer and/or is executed by the computer, the computer becomes a non-transitory apparatus for practicing the process or processes. The process or processes may be implemented on a general purpose microprocessor or on a digital processor specifically configured to practice the process or processes. When a general-purpose microprocessor is employed, the computer program code configures the circuitry of the microprocessor to create specific logic circuit arrangements. Storage medium readable by a computer includes medium being readable by a computer per se or by another machine that reads the computer instructions for providing those instructions to a computer for controlling its operation. Such machines may include, for example, a punched card reader, a magnetic tape reader, a magnetic card reader, a memory card reader, an optical scanner, as well as machines for reading the storage media mentioned above.

As used herein, data, image and/or information are used interchangeably with respect to what is captured by sensor and/or an imaging device and/or is displayed on a display device, and are intended to encompass any and all of the wide variety of devices that a user may desire, including, but not limited to, representations of things, visual images and pictures, whether still or moving, whether captured and/or generated by a sensor, camera, computer or any other source, whether true, representative or abstract or arbitrary, whether or not including symbols or characters such as alphanumeric characters or mathematical notations, whether captured and/or displayed in black and white, monochrome, polychrome or full color.

It is noted that various data, sensor values and alarm values may represent actual physical conditions of different places and/or different equipment and/or different parts of an installation, facility, location, article, conveyance, vehicle, vessel and/or other place, e.g., generally local conditions, that may be transformed by the system and method described herein to provide a representation of the overall state and/or condition of the installation, facility, location, article, conveyance, vehicle, vessel and/or place, e.g. a representation of the complete installation, facility, location, conveyance, vehicle, vessel, article and/or place, or any part thereof. That representation may be transformative of a representation of a nominal overall state and/or condition thereof, e.g., in a prior or different condition and/or time, to a representation of an actual overall state and/or condition thereof, e.g., in a present or more recent or otherwise different condition and/or time. Further, the system and method may generate tasks and commands that are executed to transform the installation, facility, location, conveyance, vehicle, vessel, article and/or place into a different configuration, i.e. into a different installation, facility, location, conveyance, vehicle, vessel, article and/or place, and a representation of that different configuration is provided or displayed, e.g., to human operators. The system described herein may include one or more general purpose and/or special purpose computers, or microprocessors or other processors, and the method described herein may be performed in part by one or more general purpose and/or special purpose computers, or microprocessors or other processors.

While the present invention has been described in terms of the foregoing example embodiments, variations within the scope of the present invention as defined by the claims following will be apparent to those skilled in the art. For example, while examples of distance measuring sensors and of configurations of arrays thereof are described, different distance measuring sensors and different array configurations therefor, both in terms of the number of sensors and physical layouts and spacings thereof, may be employed within the present scope.

While the array of distance measuring sensors will typically include a plurality of distance measuring sensors in the cross-rail (e.g., x) direction so as to have, e.g., at least half of the nominal rail head width within its field of view, one or more distance measuring sensors may be included in the along the rail (e.g., y) direction of the sensor array. The number of distance measuring sensors employed in the direction along the rail (e.g., y) will depend upon, e.g., the expected range of operating speeds of the railcars on which system 100 will be provided and the desired resolution in the along the rail direction.

While it is generally preferred that the rail monitoring system 100 be employed in pairs on a locomotive or other railcar of regular operating trains, which tends to provide monitoring of tracks and both rails thereof on a daily basis using daily operating trains, or at other train operating frequencies; a single rail monitoring system 100 may be employed without departing from what is described and claimed. Further, one or more monitoring systems 100 may be employed on individual rail inspection vehicles, or on maintenance trains or repair trains, or on other vehicles that run of the tracks to be monitored, as well as on regularly operating trains, as may be deemed desired and convenient by a railway operator, a track owner, a maintenance or repair entity, an inspecting entity, a compliance verification entity, and the like.

While certain features may be described as a raised feature, e.g., a ridge, boss, flange, projection, detent, or other raised feature, such feature may be positively formed or may be what remains after a recessed feature, e.g., a groove, slot, hole, indentation, recess, detent, or other recessed feature, is made. Similarly, while certain features may be described as a recessed feature, e.g., a groove, slot, hole, indentation, recess or other recessed feature, such feature may be positively formed or may be what remains after a raised feature, e.g., a ridge, boss, flange, projection or other raised feature, is made. In addition, where a raised feature engages a recessed feature, such as a cylindrical projection that engages a complementary receptacle, the relative positions of the raised and recessed features may be interchanged or other wise modified.

Finally, numerical values stated are typical or example values, are not limiting values, and do not preclude substantially larger and/or substantially smaller values. Values in any given embodiment may be substantially larger and/or may be substantially smaller than the example or typical values stated.

## Claims

1. A system (100) for detecting and measuring track defects including degree of wear-defects, structural defects, and rail track distortions, wherein the rail (220) has a rail head (226) having a width and a height, the system comprising:
an array (120SA) of sensors including plural time-of-flight (TOF) distance measuring sensors (120S) arranged for measuring distance to the rail head (226) for obtaining dimensional data of the rail head;
wherein the array (120SA) of sensors is configured to have a field of view (130) that covers more than half of the width of the rail head (226) of a known good rail and that covers a predetermined distance along the rail (220) in a train traveling direction;
wherein the field of view (130) of the array (120SA) of sensors is configured to have distance measuring sensor spot areas of each of the distance measuring sensors (120S) of the array of sensors that are configured to together cover at least the more than half of the width of the rail head (226) and the predetermined distance along the rail (220) in the train traveling direction, and wherein the spot area of each distance measuring sensor (120S) is selected to complement others of the spot areas of the other distance measuring sensors to obtain distance measurement data to the rail head (226) within the field of view (130);
whereby an array of distance measurement data therefrom is representative of the covered area of the rail head width and in the train traveling direction,
wherein the distance measuring sensors (120S) of the array (120SA) of sensors are synchronized with each other for measuring distance substantially concurrently and wherein the dimensional data therefrom is geo-tagged by being associated with a location and a time that are representative of where and when the distance measuring sensors (120S) measure distance;
a memory (144) for receiving and storing the distance measurement data including the associated geo-tagging data;
a processor (140) for processing the distance measurement data to the rail head (226) to determine the dimensional data of the rail head including at least the width of the rail head with respect to that of a known good rail and the height of the rail head (226) with respect to that of a known good rail, the processor (140) processing the dimensional data for detecting rail wear and rail defects,
wherein the array (120SA) of sensors is operated to obtain dimensional data from which rail wear, surface defects, rail structural defects, rail fractures and cracks, and/or a gap in a joint in the rail (220), are measured and detected.

2. The system (100) for detecting and measuring track defects including degree of wear-defects, structural defects, and rail track distortions of claim 1 wherein the array (120SA) of sensors is configured to have a field of view (130) that covers more than the width of the rail head (226) of the known good rail.

3. The system (100) for detecting and measuring track defects including degree of wear-defects, structural defects, and rail track distortions of claim 1 wherein:
the array (120SA) of sensors (120S) and the processor (140) are configured to determine wear and/or deformation including plastic flow of the rail (220); or
the array (120SA) of sensors (120S) and the processor (140) are configured to determine a thickness of the rail head (226) in comparison to the known-good rail including wear thereof in the vertical and horizontal directions; or
the array (120SA) of sensors (120S) and the processor (140) are configured to determine surface defects including squats, palling, corrugation and deformation in the vertical direction; or
the array (120SA) of sensors (120S) and the processor (140) are configured to determine a dimension of gaps at rail joints and/or an aggregate the dimensions of rail joints over a length of at least two rail joints; or
any combination of any one or more of the foregoing.

4. The system (100) for detecting and measuring track defects including degree of wear-defects, structural defects, and rail track distortions of claim 1 wherein:
the processor (140) is configured to retrieve distance measurement data for a predetermined period of time for determining a rate of wear and/or of defects in track and/or rail over the predetermined period of time; or
the processor (140) is configured to retrieve distance measurement data for a predetermined period of time for determining a history of wear and/or of defects in track and/or rail over the predetermined period of time; or
the processor (140) is configured to retrieve distance measurement data for a length of track and/or rail within a predetermined geographic area for determining a rate of wear and/or of defects in the track and/or rail over the predetermined geographic area; or
the processor (140) is configured to retrieve distance measurement data for a length of track and/or rail within a predetermined geographic area for determining a history of wear and/or of defects in the track and/or rail over the predetermined geographic area; or
the processor (140) is configured to retrieve distance measurement data for identifying wear and/or defects in the track and/or rail that require inspection, maintenance and/or repair within a predetermined period of time; or
the processor (140) is configured to retrieve distance measurement data for identifying wear and/or defects in the track and/or rail that require inspection, maintenance and/or repair within a predetermined geographic area; or
the processor is (140) configured to retrieve distance measurement data for determining a history of rates of wear and/or defects in the track and/or rail that have required inspection, maintenance and/or repair within a predetermined period of time; or
the processor (140) is configured to retrieve distance measurement data for determining a history of rates of wear and/or defects in the track and/or rail that require inspection, maintenance and/or repair within a predetermined geographic area; or
any combination of any one or more of the foregoing.

5. The system (100) for detecting and measuring track defects including degree of wear-defects, structural defects, and rail track distortions of claim 4 wherein:
the processor (140) is configured to determine from the retrieved distance measurement data a model of the rates of wear and/or defects in the track and/or rail; and
the processor (140) is configured to apply the determined model to extrapolate the retrieved distance measurement data for wear and/or defects in the track and/or rail for a selected prediction time in the future.

6. The system (100) for detecting and measuring track defects including degree of wear-defects, structural defects, and rail track distortions of claim 1 wherein the array (120SA) of sensors is a first array of sensors (120S), the system further comprising:
a second array (120SA) of sensors including plural time-of-flight (TOF) distance measuring sensors (120S) arranged for measuring distance to the rail head (226) for obtaining dimensional data of the rail head, wherein the second array (120SA) of sensors is functionally the same as the first array (120SA) of sensors recited in claim 1,
wherein the first array (120SA) of sensors (120S) is positioned to have a first rail of a track within its field of view and the second array (120SA) of sensors is positioned to have a second rail of the track within its field of view;
wherein the memory (144) is for receiving and storing distance measurement data from the second array (120SA) of sensors (120S) including associated geo-tagging data.

7. The system (100) for detecting and measuring track defects including degree of wear-defects, structural defects, and rail track distortions of claim 6 wherein:
the processor (140) processes the distance measurement data to the rail head (226) of the second rail (220) from the second array (120SA) of sensors (120S) to determine the dimensional data of the rail head of the second rail including at least the width of the rail head (226) thereof with respect to that of a known good rail and the height of the rail head of the second rail (220) with respect to that of a known good rail, the processor (140) processing the dimensional data for detecting rail wear and rail defects of the second rail,
wherein the second array (120SA) of sensors (120S) is operated to obtain dimensional data from which rail wear, surface defects, rail structural defects, rail fractures and cracks, and/or a gap (226G) in a joint in the rail (220), are measured and detected.

8. The system (100) for detecting and measuring track defects including degree of wear-defects, structural defects, and rail track distortions of claim 6 wherein:
the processor (140) processes the distance measurement data to the rail head (226) of the first rail (220) from the first array (120SA) of sensors (120S) and the distance measurement data to the rail head (226) of the second rail (220) from the second array (120SA) of sensors (120S) to determine the gauge of the track including the first and second rails with respect to that of a known good rail.

9. The system (100) for detecting and measuring track defects including degree of wear-defects, structural defects, and rail track distortions of claim 1 wherein:
the distance measuring sensors (120S) of the array (120SA) of sensors are synchronized to operate at a repetition rate that is directly proportional to a speed at which the array of sensors is moving in the train traveling direction.

10. The system (100) for detecting and measuring track defects including degree of wear-defects, structural defects, and rail track distortions of claim 1 further comprising:
a camera (120V) associated with the array (120SA) of sensors (120S) for providing visual data representing the rail (220) within the field of view (130) of the array of sensors, wherein the visual data is geo-tagged by being associated with the location and time that are representative of where and when the distance measuring sensors (120S) measure distance.

11. A method (800) for detecting and measuring track defects including degree of wear-defects, structural defects, and rail track distortions, wherein the rail (220) has a rail head (226) having a width and a height, the method comprising:
obtaining (805) an array (120SA) of sensors including plural time-of-flight (TOF) distance measuring sensors (120S) arranged for measuring distance to the rail head (226) for obtaining dimensional data of the rail head;
configuring (805) the array (120SA) of sensors (120S) to have a field of view (130) that covers more than half of the width of the rail head (226) of a known good rail and that covers a predetermined distance along the rail (220) in a train traveling direction;
configuring (805) the field of view (130) of the array (120SA) of sensors (120S) to have distance measuring sensor spot areas of each of the distance measuring sensors of the array of sensors that are configured to together cover at least the more than half of the width of the rail head (226) and the predetermined distance in the train traveling direction,
selecting (805) the spot area of each distance measuring sensor (120S) to complement others of the spot areas of the other distance measuring sensors to obtain distance measurement data to the rail head (226) within the field of view (130);
whereby distance measurement data therefrom is representative of the covered area of the rail head width and in the train traveling direction,
synchronizing (805) the distance measuring sensors (120S) of the array (120SA) of sensors with each other for measuring distance substantially concurrently and geo-tagging the dimensional data therefrom by being associated with a location and a time that are representative of where and when the distance measuring sensors measure distance;
receiving and storing (844) the distance measurement data including the associated geo-tagging data;
processing (800P) the distance measurement data to the rail head (226) to determine the dimensional data of the rail head including at least the width of the rail head with respect to that of a known good rail and the height of the rail head (226) with respect to that of a known good rail, the processing the dimensional data including detecting rail wear and rail defects,
the method (800) operating the array (120SA) of sensors (120S) to obtain dimensional data from which rail wear, surface defects, rail structural defects, rail fractures and cracks, and/or a gap in a joint in the rail (220), are measured and detected.

12. The method (800) for detecting and measuring track defects including degree of wear-defects, structural defects, and rail track distortions of claim 11 including configuring the array (120SA) of sensors (120S) to have a field of view (130) that covers more than the width of the rail head (226) of the known good rail.

13. The method (800) for detecting and measuring track defects including degree of wear-defects, structural defects, and rail track distortions of claim 11 including:
configuring (805, 800P) the array (120SA) of sensors (120S) and the processor (140) to determine wear and/or deformation including plastic flow of the rail (220); or
configuring (805, 800P) the array (120SA) of sensors (120S) and the processor (140) to determine a thickness of the rail head (226) in comparison to the known-good rail including wear thereof in the vertical and horizontal directions; or
configuring (805, 800P) the array (120SA) of sensors (120S) and the processor (140) to determine surface defects including squats (226S), spalling, corrugation (226C) and deformation in the vertical direction; or
configuring (805, 800P) the array (120SA) of sensors (120S) and the processor (140) to determine a dimension of gaps (226G) at rail joints and/or an aggregate the dimensions of rail joints over a length of at least two rail joints; or
any combination of any one or more of the foregoing.

14. The method (800) for detecting and measuring track defects including degree of wear-defects, structural defects, and rail track distortions of claim 11 wherein:
configuring the processing (800P) to retrieve distance measurement data for a predetermined period of time for determining a rate of wear and/or of defects in track and/or rail over the predetermined period of time; or
configuring the processing (800P) to retrieve distance measurement data for a predetermined period of time for determining a history of wear and/or of defects in track and/or rail over the predetermined period of time; or
configuring the processing (800P) to retrieve distance measurement data for a length of track and/or rail within a predetermined geographic area for determining a rate of wear and/or of defects in the track and/or rail over the predetermined geographic area; or
configuring the processing (800P) to retrieve distance measurement data for a length of track and/or rail within a predetermined geographic area for determining a history of wear and/or of defects in the track and/or rail over the predetermined geographic area; or
configuring the processing (800P) to retrieve distance measurement data for identifying wear and/or defects in the track and/or rail that require inspection, maintenance and/or repair within a predetermined period of time; or
configuring the processing (800P) to retrieve distance measurement data for identifying wear and/or defects in the track and/or rail that require inspection, maintenance and/or repair within a predetermined geographic area; or
configuring the processing (800P) to retrieve distance measurement data for determining a history of rates of wear and/or defects in the track and/or rail that have required inspection, maintenance and/or repair within a predetermined period of time; or
configuring the processing (800P) to retrieve distance measurement data for determining a history of rates of wear and/or defects in the track and/or rail that require inspection, maintenance and/or repair within a predetermined geographic area; or
any combination of any one or more of the foregoing.

15. The method f(800) or detecting and measuring track defects including degree of wear-defects, structural defects, and rail track distortions of claim 14 including:
configuring the processing (800P) to determine from the retrieved distance measurement data a model of the rates of wear and/or defects in the track and/or rail; and
configuring the processing (800P) to apply the determined model to extrapolate the retrieved distance measurement data for wear and/or defects in the track and/or rail for a selected prediction time in the future.

16. The method (800) for detecting and measuring track defects including degree of wear-defects, structural defects, and rail track distortions of claim 11 including:
calibrating (810) the array (120SA) of sensors (120S) to a known good track and/or to a known-good rail.

17. The method (800) for detecting and measuring track defects including degree of wear-defects, structural defects, and rail track distortions of claim 11 including:
configuring (805, 800P) the array (120SA) of sensors (120S) and the processor (140) to determine surface defects including squats (226S), spalling, corrugation (226C) and deformation; or
configuring (805, 800P) the array (120SA) of sensors (120S) and the processor (140) to determine a dimension of gaps (226G) at rail joints and/or an aggregate the dimensions of rail joints over a length of at least two rail joints; or
configuring (805, 800P) the array (120SA) of sensors (120S) and the processor (140) to determine a rate of defects over a predetermined period of time; or
any combination of any one or more of the foregoing.

18. The method (800) for detecting and measuring track defects including degree of wear-defects, structural defects, and rail track distortions of claim 11 wherein the obtained array (120SA) of sensors is a first array of sensors (120S), the method further comprising:
obtaining (805, 800A) a second array (120SA) of sensors including plural time-of-flight (TOF) distance measuring sensors (120S) arranged for measuring distance to the rail head (226) for obtaining dimensional data of the rail head, wherein the second array (120SA) of sensors is functionally the same as the first array (120SA) of sensors (120S) recited in claim 11,
positioning (805) the first array (120SA) of sensors (120S) to have a first rail (220) of a track within its field of view (130) and positioning the second array (120SA) of sensors (120S) to have a second rail (220) of the track within its field of view (130);
wherein the receiving and storing (800A) distance measurement data includes receiving and storing distance measurement data from the first array (120SA) of sensors (120S) and from the second array (120SA) of sensors (120S) including their associated geo-tagging data.

19. The method (800) for detecting and measuring track defects including degree of wear-defects, structural defects, and rail track distortions of claim 18 further including:
processing (800P) the distance measurement data to the rail head (226) of the second rail (220) from the second array (120SA) of sensors (120S) to determine the dimensional data of the rail head of the second rail including at least the width of the rail head (226) thereof with respect to that of a known good rail and the height of the rail head of the second rail (220) with respect to that of a known good rail, for processing the dimensional data for detecting rail wear and rail defects of the second rail, and
operating (800A) the second array (120SA) of sensors (120S) to obtain dimensional data from which rail wear, surface defects, rail structural defects, rail fractures and cracks, and/or a gap in a joint in the rail, are measured and detected.

20. The method (800) for detecting and measuring track defects including degree of wear-defects, structural defects, and rail track distortions of claim 11 wherein the synchronizing the distance measuring sensors (120S) of the array (120SA) of sensors includes:
synchronizing (805, 800A) the distance measuring sensors (120S) of the array (120SA) of sensors for operating at a repetition rate that is directly proportional to a speed at which the array of sensors is moving in the train traveling direction.

21. The method (800) for detecting and measuring track defects including degree of wear-defects, structural defects, and rail track distortions of claim 11 further comprising:
providing (800M) visual data representing the rail head (226) within the field of view (130) of the array (120SA) of sensors (120S) , and geo-tagging the visual data by associating the visual data with the location and time that are representative of where and when the distance measuring sensors (120S) measure distance.

## Patentansprüche

1. System (100) zum Erfassen und Messen von Gleisschäden inklusive eines Grads von Abnutzungsschäden, strukturellen Schäden und Schienenwegverformungen, bei dem die Schiene (220) einen Schienenkopf (226) mit einer Breite und einer Höhe aufweist, welches System aufweist:
ein Array (120SA) aus Sensoren, das mehrere Laufzeitabstandsmessungssensoren (TOF) (120S) aufweist, die zum Messen eines Abstands zu dem Schienenkopf (226) zum Erlangen von Abmessungsdaten des Schienenkopfs angeordnet sind;
bei dem das Array (120SA) aus Sensoren dazu konfiguriert ist, dass es ein Sichtfeld (130) aufweist, das mehr als die Hälfte der Breite des Schienenkopfes (226) einer bekannten guten Schiene abdeckt und das einen vorbestimmten Abstand entlang der Schiene (220) in einer Zugfahrtrichtung abdeckt;
bei dem das Sichtfeld (130) des Arrays (120SA) aus Sensoren konfiguriert ist zum Aufweisen von Abstandsmessungssensorpunktflächen für jeden der Abstandmessungssensoren (120S) des Arrays aus Sensoren, die dazu konfiguriert sind, zusammen mindestens mehr als die Hälfte der Breite des Schienenkopfs (226) und den vorbestimmten Abstand entlang der Schiene (220) in der Zugfahrtrichtung abzudecken, und bei dem die Punktfläche jedes Abstandsmessungssensors (120S) ausgewählt ist zum Komplementieren anderer der Punktflächen der anderen Abstandsmessungssensoren zum Erlangen von Abstandsmessungsdaten zu dem Schienenkopf (226) innerhalb des Sichtfelds (130);
wodurch ein Array von Abstandsmessungsdaten von diesen repräsentativ für die abgedeckte Fläche der Schienenkopfbreite und in der Zugfahrtrichtung ist;
bei dem die Abstandsmessungssensoren (120S) des Arrays (120SA) aus Sensoren miteinander synchronisiert sind zur im Wesentlichen gleichzeitigen Abstandsmessung, und bei dem Abmessungsdaten von diesen Geo-getaggt sind durch ein Verknüpfen mit einem Ort und einer Zeit, die repräsentativ dafür sind, wo und wann die Abstandsmessungssensoren (120S) einen Abstand messen;
einen Speicher (144) zum Empfangen und Speichern der Abstandsmessungsdaten, die die verknüpften Geotagging-Daten aufweisen;
einen Prozessor (140) zum Verarbeiten der Abstandsmessungsdaten zu dem Schienenkopf (226) zum Bestimmen der Abmessungsdaten des Schienenkopfs inklusive mindestens der Breite des Schienenkopfs in Bezug auf die einer bekannten guten Schiene und der Höhe des Schienenkopfs (226) in Bezug auf die einer bekannten guten Schiene, welcher Prozessor (140) die Abmessungsdaten zum Erfassen von Schienenabnutzung und Schienenschäden verarbeitet,
bei dem das Array (120SA) aus Sensoren betrieben wird zum Erlangen von Abmessungsdaten, aus denen Schienenabnutzung, Oberflächenschäden, strukturelle Schienenschäden, Schienenbrüche und Risse, und/oder eine Lücke in einer Verbindung in der Schiene (220) gemessen und erfasst werden.

2. System (100) zum Erfassen und Messen von Gleisschäden inklusive eines Grads von Abnutzungsschäden, strukturellen Schäden und Schienenwegverformungen nach Anspruch 1, bei dem das Array (120SA) aus Sensoren dazu konfiguriert ist, ein Sichtfeld (130) aufzuweisen, das mehr als die Breite des Schienenkopfs (226) der bekannten guten Schiene abdeckt.

3. System (100) zum Erfassen und Messen von Gleisschäden inklusive eines Grads von Abnutzungsschäden, strukturellen Schäden und Schienenwegverformungen nach Anspruch 1, bei dem
das Array (120SA) aus Sensoren (120S) und der Prozessor (140) konfiguriert sind, zum Bestimmen von Abnutzung und/oder Verformung inklusive plastischem Fließen der Schiene (220), oder
das Array (120SA) aus Sensoren (120S) und der Prozessor (140) konfiguriert sind zum Bestimmen einer Dicke des Schienenkopfs (226) im Vergleich zu der bekannten guten Schiene, die eine Abnutzung derselben in den vertikalen und horizontalen Richtungen umfasst, oder
das Array (120SA) aus Sensoren (120S) und der Prozessor (140) konfiguriert sind, zum Bestimmen von Oberflächenschäden, die Erweichungen, Absplittern, Wellenbildung und Verformung in der vertikalen Richtung umfassen, oder
das Array (120SA) aus Sensoren (120S) und der Prozessor (140) konfiguriert sind, zum Bestimmen einer Abmessung von Lücken an Schienenverbindungen und/oder einer Anhäufung der Abmessungen von Schienenverbindungen über eine Länge von mindestens zwei Schienenverbindungen, oder
jede Kombination von jedem oder mehreren der Vorhergehenden möglich ist.

4. System (100) zum Erfassen und Messen von Gleisschäden inklusive eines Grads von Abnutzungsschäden, strukturellen Schäden und Schienenwegverformungen nach Anspruch 1, bei dem
der Prozessor (140) dazu konfiguriert ist, Abstandsmessungsdaten für eine bestimmte Zeitspanne abzurufen zum Bestimmen einer Abnutzungs- und/oder einer Schadensrate eines Gleises und/oder einer Schiene über die vorbestimmte Zeitspanne, oder
der Prozessor (140) dazu konfiguriert ist, Abstandsmessungsdaten für eine vorbestimmte Zeitspanne abzurufen zum Bestimmen einer Abnutzungs- und/oder Schadensgeschichte an einem Gleis und/oder einer Schiene über die vorbestimmte Zeitspanne, oder
der Prozessor (140) dazu konfiguriert ist, Abstandsmessungsdaten für eine Länge eines Gleises und/oder einer Schiene innerhalb einer vorbestimmten geographischen Fläche abzurufen zum Bestimmen einer Abnutzungs- und/oder Schadensrate an dem Gleis und/oder der Schiene über die vorbestimmte geographische Fläche, oder
der Prozessor (140) dazu konfiguriert ist, Abstandsmessungsdaten für eine Länge eines Gleises und/oder einer Schiene innerhalb einer vorbestimmten geographischen Fläche abzurufen zum Bestimmen einer Geschichte von Abnutzung und/oder Schäden an dem Gleis und/oder der Schiene über die vorbestimmte geographische Fläche, oder
der Prozessor (140) dazu konfiguriert ist, Abstandsmessungsdaten abzurufen zum Identifizieren von Abnutzung und/oder Schäden an dem Gleis und/oder der Schiene, die eine Inspektion, eine Wartung und/oder eine Reparatur innerhalb einer vorbestimmten Zeitspanne benötigen, oder
der Prozessor (140) dazu konfiguriert ist, Abstandsmessungsdaten abzurufen zum Identifizieren von Abnutzung und/oder Schäden an dem Gleis und/oder der Schiene, die eine Inspektion, eine Wartung und/oder eine Reparatur innerhalb einer vorbestimmten geographischen Fläche benötigen, oder
der Prozessor (140) dazu konfiguriert ist, Abstandsmessungsdaten abzurufen zum Bestimmen einer Geschichte von Abnutzungs- und/oder Schadensraten an dem Gleis und/oder der Schiene, die eine Inspektion, eine Wartung und/oder eine Reparatur innerhalb einer vorbestimmten Zeitspanne benötigt haben, oder
der Prozessor (140) dazu konfiguriert ist, Abstandsmessungsdaten abzurufen, zum Bestimmen einer Geschichte von Abnutzungs- und/oder Schadensraten an dem Gleis und/oder der Schiene, die eine Inspektion, eine Wartung und/oder eine Reparatur innerhalb einer vorbestimmten geographischen Fläche benötigen, oder
jede Kombination von jedem oder mehreren der Vorhergehenden möglich ist.

5. System (100) zum Erfassen und Messen von Gleisschäden inklusive eines Grads von Abnutzungsschäden, strukturellen Schäden und Schienenwegverformungen nach Anspruch 4, bei dem
der Prozessor (140) dazu konfiguriert ist, aus den abgerufenen Abstandsmessungsdaten ein Modell der Abnutzungs- und/oder Schadensraten an dem Gleis und/oder der Schiene zu bestimmen, und
der Prozessor (140) dazu konfiguriert ist, das bestimmte Modell zum Extrapolieren der abgerufenen Abstandsmessungsdaten von einer Abnutzung und/oder Schäden an dem Gleis und/oder der Schiene für eine ausgewählte Prognosezeit in der Zukunft anzuwenden.

6. System (100) zum Erfassen und Messen von Gleisschäden inklusive eines Grads von Abnutzungsschäden, strukturellen Schäden und Schienenwegverformungen nach Anspruch 1, bei dem das Array (120SA) aus Sensoren ein erstes Array (120S) aus Sensoren ist, welches System weiter aufweist:
ein zweites Array (120SA) aus Sensoren, das mehrere Laufzeitabstandsmessungssensoren (TOF) (120S) aufweist, die zum Messen eines Abstands zu dem Schienenkopf (226) zum Erlangen von Abmessungsdaten des Schienenkopfs angeordnet sind, bei dem das zweite Array (120SA) aus Sensoren funktionell das gleiche wie das erste Array (120SA) aus Sensoren aus Anspruch 1 ist,
bei dem das erste Array (120SA) aus Sensoren (120S) zum Aufweisen einer ersten Schiene eines Gleises innerhalb seines Sichtfelds positioniert ist und das zweite Array (120SA) aus Sensoren zum Aufweisen einer zweiten Schiene des Gleises innerhalb seines Sichtfelds positioniert ist,
bei dem der Speicher (144) zum Erhalten und Speichern von Abstandsmessungsdaten von dem zweiten Array (120SA) aus Sensoren (120S), die verknüpfte Geotagging-Daten aufweisen, ausgebildet ist.

7. System (100) zum Erfassen und Messen von Gleisschäden inklusive eines Grads von Abnutzungsschäden, strukturellen Schäden und Schienenwegverformungen nach Anspruch 6, bei dem
der Prozessor (140) die Abstandsmessungsdaten zu dem Schienenkopf (226) der zweiten Schiene (220) von dem zweiten Array (120SA) aus Sensoren (120S) verarbeitet zum Bestimmen der Abmessungsdaten des Schienenkopfs der zweiten Schiene, die mindestens die Breite des Schienenkopfs (226) in Bezug auf die einer bekannten guten Schiene und die Höhe des Schienenkopfs der zweiten Schiene (220) in Bezug auf die einer bekannten guten Schiene aufweisen, der Prozessor (140) die Abmessungsdaten zum Bestimmen von Schienenabnutzung und Schienenschäden der zweiten Schiene verarbeitet,
bei dem das zweite Array (120SA) aus Sensoren (120S) betrieben wird zum Erlangen von Abmessungsdaten, aus denen Schienenabnutzung, Oberflächenschäden, strukturelle Schienenschäden, Schienenbrüche und Risse, und/oder eine Lücke (226G) in einer Verbindung in der Schiene (220) gemessen und erfasst werden.

8. System (100) zum Erfassen und Messen von Gleisschäden inklusive eines Grads von Abnutzungsschäden, strukturellen Schäden und Schienenwegverformungen nach Anspruch 6, bei dem
der Prozessor (140) die Abstandsmessungsdaten zu dem Schienenkopf (226) der ersten Schiene (220) von dem ersten Array (120SA) aus Sensoren (120S) und die Abstandsmessungsdaten zu dem Schienenkopf (226) der zweiten Schiene (220) von dem zweiten Array (120SA) aus Sensoren (120S) verarbeitet zum Bestimmen der Spurweite des Gleises, das die ersten und zweiten Schienen aufweist, in Bezug auf die eines bekannten guten Gleises.

9. System (100) zum Erfassen und Messen von Gleisschäden inklusive eines Grads von Abnutzungsschäden, strukturellen Schäden und Schienenwegverformungen nach Anspruch 1, bei dem
die Abstandsmessungssensoren (120S) des Arrays (120SA) aus Sensoren synchronisiert sind zum Betreiben mit einer Wiederholungsrate, die direkt proportional zu einer Geschwindigkeit ist, mit der sich das Array aus Sensoren in der Zugfahrtrichtung bewegt.

10. System (100) zum Erfassen und Messen von Gleisschäden inklusive eines Grads von Abnutzungsschäden, strukturellen Schäden und Schienenwegverformungen nach Anspruch 1, das weiter aufweist:
eine Kamera (120V), die mit dem Array (120SA) aus Sensoren (120S) verknüpft ist zum Liefern visueller Daten, die die Schiene (220) innerhalb des Sichtfelds (130) des Arrays aus Sensoren darstellen, bei dem die visuellen Daten Geo-getaggt sind durch ein Verknüpfen mit dem Ort und der Zeit, die repräsentativ dafür sind, wo und wann die Abstandsmessungssensoren (120S) einen Abstand messen.

11. Verfahren (800) zum Erfassen und Messen von Gleisschäden inklusive eines Grads von Abnutzungsschäden, strukturellen Schäden und Schienenwegverformungen, bei dem die Schiene (220) einen Schienenkopf (226) mit einer Breite und einer Höhe aufweist, welches Verfahren aufweist:
Erlangen (805) eines Arrays (120SA) aus Sensoren, das mehrere Laufzeitabstandsmessungssensoren (TOF) (120S) aufweist, die zum Messen eines Abstands zu dem Schienenkopf (226) zum Erlangen von Abmessungsdaten des Schienenkopfs angeordnet sind;
Konfigurieren (805) des Arrays (120SA) aus Sensoren (120S) zum Aufweisen eines Sichtfelds (130), das mehr als die Hälfte der Breite des Schienenkopfs (226) einer bekannten guten Schiene abdeckt und das einen vorbestimmten Abstand entlang der Schiene (220) in einer Zugfahrtrichtung abdeckt;
Konfigurieren (805) des Sichtfelds (130) des Arrays (120SA) aus Sensoren (120S) zum Aufweisen von Abstandsmessungssensorpunktflächen für jeden der Abstandsmessungssensoren des Arrays aus Sensoren, die dazu konfiguriert sind, zusammen mindestens mehr als die Hälfte der Breite des Schienenkopfs (226) und den vorbestimmten Abstand in der Zugfahrtrichtung abzudecken,
Auswählen (805) der Punktfläche jedes Abstandsmessungssensors (120S) zum Komplementieren anderer der Punktflächen der anderen Abstandsmessungssensoren zum Erlangen von Abstandsmessungsdaten zu dem Schienenkopf (226) innerhalb des Sichtfelds (130);
wodurch Abstandsmessungsdaten von diesen repräsentativ für die abgedeckte Fläche der Schienenkopfbreite und in der Zugfahrtrichtung sind,
Synchronisieren (805) der Abstandsmessungssensoren (120S) des Arrays (120SA) aus Sensoren miteinander zur im Wesentlichen gleichzeitigen Abstandsmessung und Geo-taggen der Abmessungsdaten durch ein Verknüpfen mit einem Ort und einer Zeit, die repräsentativ dafür sind, wo und wann die Abstandsmessungssensoren einen Abstand messen;
Erhalten und Speichern (844) der Abstandsmessungsdaten, die die verknüpften Geotagging-Daten aufweisen;
Verarbeiten (800P) der Abstandsmessungsdaten zu dem Schienenkopf (226), zum Bestimmen der Abmessungsdaten des Schienenkopfs mit mindestens der Breite des Schienenkopfs in Bezug auf die einer bekannten guten Schiene und der Höhe des Schienenkopfs (226) in Bezug auf die einer bekannten guten Schiene, bei dem das Verarbeiten der Abmessungsdaten ein Erfassen von Schienenabnutzung und Schienenschäden aufweist,
welches Verfahren (800) das Array (120SA) aus Sensoren (120S) betreibt zum Erlangen von Abmessungsdaten, aus denen Schienenabnutzung, Oberflächenschäden, strukturelle Schienenschäden, Schienenbrüche und Risse und/oder eine Lücke in einer Verbindung in der Schiene (220) gemessen und erfasst werden.

12. Verfahren (800) zum Erfassen und Messen von Gleisschäden inklusive eines Grads von Abnutzungsschäden, strukturellen Schäden und Schienenwegverformungen nach Anspruch 11, das ein Konfigurieren des Arrays (120SA) aus Sensoren (120S) zum Aufweisen eines Sichtfelds (130), das mehr als die Breite des Schienenkopfs (226) der bekannten guten Schiene abdeckt aufweist.

13. Verfahren (800) zum Erfassen und Messen von Gleisschäden inklusive eines Grads von Abnutzungsschäden, strukturellen Schäden und Schienenwegverformungen nach Anspruch 11, das aufweist:
Konfigurieren (805, 800P) des Arrays (120SA) aus Sensoren (120S) und des Prozessors (140) zum Bestimmen von Abnutzung und/oder Verformung inklusive plastischem Fließen der Schiene (220); oder
Konfigurieren (805, 800P) des Arrays (120SA) aus Sensoren (120S) und des Prozessors (140) zum Bestimmen einer Dicke des Schienenkopfs (226) im Vergleich zu der bekannten guten Schiene, die eine Abnutzung derselben in den vertikalen und horizontalen Richtungen umfasst; oder
Konfigurieren (805, 800P) des Arrays (120SA) aus Sensoren (120S) und des Prozessors (140) zum Bestimmen von Oberflächenschäden, die Erweichungen (226S), Absplittern, Wellenbildung (226C) und Verformung in der vertikalen Richtung umfassen; oder
Konfigurieren (805, 800P) des Arrays (120SA) aus Sensoren (120S) und des Prozessors (140), zum Bestimmen einer Abmessung von Lücken (226G) an Schienenverbindungen und/oder einer Anhäufung der Abmessungen von Schienenverbindungen über eine Länge von mindestens zwei Schienenverbindungen; oder
jede Kombination von irgend einem oder mehreren der Vorhergehenden.

14. Verfahren (800) zum Erfassen und Messen von Gleisschäden inklusive eines Grads von Abnutzungsschäden, strukturellen Schäden und Schienenwegverformungen nach Anspruch 11, bei dem:
Konfigurieren des Verarbeitens (800P) zum Abrufen von Abstandsmessungsdaten für eine bestimmte Zeitspanne zum Bestimmen einer Abnutzungs- und/oder einer Schadensrate eines Gleises und/oder einer Schiene über die vorbestimmte Zeitspanne, oder
Konfigurieren des Verarbeitens (800P) zum Abrufen von Abstandsmessungsdaten für eine bestimmte Zeitspanne zum Bestimmen einer Abnutzungs- und/oder Schadensgeschichte an einem Gleis und/oder einer Schiene über die vorbestimmte Zeitspanne, oder
Konfigurieren des Verarbeitens (800P) zum Abrufen von Abstandsmessungsdaten für eine Länge eines Gleises und/oder einer Schiene innerhalb einer vorbestimmten geographischen Fläche zum Bestimmen einer Abnutzungs- und/oder Schadensrate an dem Gleis und/oder der Schiene über die vorbestimmte geographische Fläche, oder
Konfigurieren des Verarbeitens (800P) zum Abrufen von Abstandsmessungsdaten für eine Länge eines Gleises und/oder einer Schiene innerhalb einer vorbestimmten geographischen Fläche zum Bestimmen einer Abnutzungs- und/oder Schadensgeschichte an dem Gleis und/oder der Schiene über die vorbestimmte geographische Fläche, oder
Konfigurieren des Verarbeitens (800P) zum Abrufen von Abstandsmessungsdaten zum Identifizieren von Abnutzung und/oder Schäden an dem Gleis und/oder der Schiene, die eine Inspektion, eine Wartung und/oder eine Reparatur innerhalb einer vorbestimmten Zeitspanne benötigen, oder
Konfigurieren des Verarbeitens (800P) zum Abrufen von Abstandsmessungsdaten zum Identifizieren von Abnutzung und/oder Schäden an dem Gleis und/oder der Schiene, die eine Inspektion, eine Wartung und/oder eine Reparatur innerhalb einer vorbestimmten geographischen Fläche benötigen, oder
Konfigurieren des Verarbeitens (800P) zum Abrufen von Abstandsmessungsdaten zum Bestimmen einer Geschichte von Abnutzungs- und/oder Schadensraten an dem Gleis und/oder der Schiene, die eine Inspektion, eine Wartung und/oder eine Reparatur innerhalb einer vorbestimmten Zeitspanne benötigt haben, oder
Konfigurieren des Verarbeitens (800P) zum Abrufen von Abstandsmessungsdaten zum Bestimmen einer Geschichte von Abnutzungs- und/oder Schadensraten an dem Gleis und/oder der Schiene, die eine Inspektion, eine Wartung und/oder eine Reparatur innerhalb einer vorbestimmten geographischen Fläche benötigen, oder
jede Kombination von irgendeinem oder mehreren der Vorhergehenden.

15. Verfahren (800) zum Erfassen und Messen von Gleisschäden inklusive eines Grads von Abnutzungsschäden, strukturellen Schäden und Schienenwegverformungen nach Anspruch 14, das aufweist:
Konfigurieren des Verarbeitens (800P) zum Bestimmen eines Modells der Abnutzungs- und/oder Schadensraten an dem Gleis und oder der Schiene aus den abgerufenen Abstandsmessungsdaten; und
Konfigurieren des Verarbeitens (800P) zum Anwenden des bestimmten Modells zum Extrapolieren der abgerufenen Abstandsmessungsdaten von einer Abnutzung und/oder Schäden an dem Gleis und/oder der Schiene für eine ausgewählte Prognosezeit in der Zukunft.

16. Verfahren (800) zum Erfassen und Messen von Gleisschäden inklusive eines Grads von Abnutzungsschäden, strukturellen Schäden und Schienenwegverformungen nach Anspruch 11, das aufweist:
Kalibrieren (810) des Arrays (120SA) aus Sensoren (120S) mit einem bekannten guten Gleis und/oder einer bekannten guten Schiene.

17. Verfahren (800) zum Erfassen und Messen von Gleisschäden inklusive eines Grads von Abnutzungsschäden, strukturellen Schäden und Schienenwegverformungen nach Anspruch 11, das aufweist:
Konfigurieren (805, 800P) des Arrays (120SA) aus Sensoren (120S) und des Prozessors (140) zum Bestimmen von Oberflächenschäden, die Erweichungen (226S), Absplittern, Wellenbildung (226C) und Verformung umfassen; oder
Konfigurieren (805, 800P) des Arrays (120SA) aus Sensoren (120S) und des Prozessors (140) zum Bestimmen einer Abmessung von Lücken (226G) an Schienenverbindungen und/oder einer Anhäufung der Abmessungen von Schienenverbindungen über eine Länge von mindestens zwei Schienenverbindungen; oder
Konfigurieren (805, 800P) des Arrays (120SA) aus Sensoren (120S) und des Prozessors (140) zum Bestimmen einer Rate von Schäden über eine vorbestimmte Zeitspanne; oder
jede Kombination von irgend einem oder mehreren der Vorhergehenden.

18. Verfahren (800) zum Erfassen und Messen von Gleisschäden inklusive eines Grads von Abnutzungsschäden, strukturellen Schäden und Schienenwegverformungen nach Anspruch 11, bei dem das erlangte Array (120SA) aus Sensoren ein erstes Array aus Sensoren (120S) ist, welches Verfahren weiter aufweist:
Erlangen (805, 800A) eines zweiten Arrays (120SA) aus Sensoren, das mehrere Laufzeitabstandsmessungssensoren (TOF) (120S) aufweist, die zum Messen eines Abstands zu dem Schienenkopf (226) zum Erlangen von Abmessungsdaten des Schienenkopfs angeordnet sind, bei dem das zweite Arrays (120SA) aus Sensoren funktionell das gleiche wie das erste Array (120SA) aus Sensoren (120S) aus Anspruch 11 ist,
Positionieren (805) des ersten Arrays (120SA) aus Sensoren (120S) zum Aufweisen einer ersten Schiene (220) eines Gleises innerhalb seines Sichtfelds (130) und ein Positionieren des zweiten Arrays (120SA) aus Sensoren (120S) zum Aufweisen einer zweiten Schiene (220) des Gleises innerhalb seines Sichtfelds (130),
bei dem das Erhalten und Speichern (800A) von Abstandsmessungsdaten ein Erhalten und Speichern von Abstandsmessungsdaten des ersten Arrays (120SA) aus Sensoren (120S) und des zweiten Arrays (120SA) aus Sensoren (120S), die deren verknüpfte Geotagging-Daten aufweisen, umfasst.

19. Verfahren (800) zum Erfassen und Messen von Gleisschäden inklusive eines Grads von Abnutzungsschäden, strukturellen Schäden und Schienenwegverformungen nach Anspruch 18, das weiter aufweist:
Verarbeiten (800P) der Abstandsmessungsdaten zum Bestimmen der Abmessungsdaten zu dem Schienenkopf (226) der zweiten Schiene (220), die mindestens die Breite des Schienenkopfs (226) in Bezug auf die einer bekannten guten Schiene und die Höhe des Schienenkopfs der zweiten Schiene (220) in Bezug auf die einer bekannten guten Schiene aufweisen zum Verarbeiten der Abmessungsdaten zum Bestimmen von Schienenabnutzung und Schienenschäden der zweiten Schiene; und
Betreiben (800A) des zweiten Arrays (120SA) aus Sensoren (120S) zum Erlangen von Abmessungsdaten, aus denen Schienenabnutzung, Oberflächenschäden, strukturelle Schienenschäden, Schienenbrüche und Risse, und/oder eine Lücke (226G) in einer Verbindung der Schiene (220) gemessen und erfasst werden.

20. Verfahren (800) zum Erfassen und Messen von Gleisschäden inklusive eines Grads von Abnutzungsschäden, strukturellen Schäden und Schienenwegverformungen nach Anspruch 11, bei dem das Synchronisieren der Abstandsmessungssensoren (120S) des Arrays (120SA) aus Sensoren aufweist:
Synchronisieren (805, 800A) der Abstandsmessungssensoren (120S) des Arrays (120SA) aus Sensoren zum Betreiben mit einer Wiederholungsgeschwindigkeit, die direkt proportional zu einer Geschwindigkeit ist, mit der sich das Array aus Sensoren in der Zugfahrtrichtung bewegt.

21. Verfahren (800) zum Erfassen und Messen von Gleisschäden inklusive eines Grads von Abnutzungsschäden, strukturellen Schäden und Schienenwegverformungen nach Anspruch 11, das weiter aufweist:
Liefern (800M) visueller Daten, die den Schienenkopf (226) innerhalb des Sichtfelds (130) des Arrays (120SA) aus Sensoren (120S) darstellen, bei dem die visuellen Daten Geo-getaggt sind durch ein Verknüpfen mit dem Ort und der Zeit, die repräsentativ dafür sind, wo und wann die Abstandsmessungssensoren (120S) einen Abstand messen.

## Revendications

1. Système (100) de détection et de mesure de défauts de voie incluant un degré de défauts d'usure, de défauts de structure et de déformations de voie ferrée, dans lequel le rail (220) présente un champignon de rail (226) ayant une largeur et une hauteur, le système comprenant :
un réseau (120SA) de capteurs incluant plusieurs capteurs (120S) de mesure de distance à temps de vol (TOF) agencés pour mesurer une distance par rapport au champignon de rail (226) afin d'obtenir des données dimensionnelles du champignon de rail ;
dans lequel le réseau (120SA) de capteurs est configuré pour avoir un champ de vision (130) qui couvre plus de la moitié de la largeur du champignon de rail (226) d'un rail correct connu et qui couvre une distance prédéterminée le long du rail (220) dans une direction de déplacement de train ;
dans lequel le champ de vision (130) du réseau (120SA) de capteurs est configuré pour présenter des zones de points de capteurs de mesure de distance de chacun des capteurs (1205) de mesure de distance du réseau de capteurs qui sont configurées pour couvrir ensemble au moins plus de la moitié de la largeur du champignon de rail (226) et de la distance prédéterminée le long du rail (220) dans la direction de déplacement de train, et dans lequel la zone de points de chaque capteur (1205) de mesure de distance est sélectionnée pour compléter d'autres zones de points parmi les zones de points des autres capteurs de mesure de distance afin d'obtenir des données de mesure de distance par rapport au champignon de rail (226) dans le champ de vision (130) ;
un réseau de données de mesure de distance à partir de celui-ci étant représentatif de la zone couverte de la largeur de champignon de rail et dans la direction de déplacement de train,
dans lequel les capteurs (1205) de mesure de distance du réseau (120SA) de capteurs sont synchronisés les uns avec les autres pour mesurer une distance sensiblement simultanément et dans lequel les données dimensionnelles provenant de ceux-ci sont géomarquées en étant associées à un emplacement et à une heure qui sont représentatifs de l'endroit et du moment où les capteurs (120S) de mesure de distance mesurent une distance ;
une mémoire (144) destinée à recevoir et à stocker les données de mesure de distance incluant les données de géomarquage associées ;
un processeur (140) destiné à traiter les données de mesure de distance par rapport au champignon de rail (226) pour déterminer les données dimensionnelles du champignon de rail incluant au moins la largeur du champignon de rail par rapport à celle d'un rail correct connu et la hauteur du champignon de rail (226) par rapport à celle d'un rail correct connu, le processeur (140) traitant les données dimensionnelles pour détecter une usure de rail et des défauts de rail,
dans lequel le réseau (120SA) de capteurs est utilisé pour obtenir des données dimensionnelles à partir desquelles une usure de rail, des défauts de surface, des défauts de structure de rail, des fractures et fissures de rail, et/ou un écart dans un joint dans le rail (220), sont mesurés et détectés.

2. Système (100) de détection et de mesure de défauts de voie incluant un degré de défauts d'usure, de défauts de structure et de déformations de voie ferrée selon la revendication 1, dans lequel le réseau (120SA) de capteurs est configuré pour présenter un champ de vision (130) qui couvre plus que la largeur du champignon de rail (226) du rail correct connu.

3. Système (100) de détection et de mesure de défauts de voie incluant un degré de défauts d'usure, de défauts de structure et de déformations de voie ferrée selon la revendication 1, dans lequel :
le réseau (120SA) de capteurs (120S) et le processeur (140) sont configurés pour déterminer une usure et/ou une déformation, y compris un écoulement plastique du rail (220) ; ou
le réseau (120SA) de capteurs (1205) et le processeur (140) sont configurés pour déterminer une épaisseur du champignon de rail (226) par rapport au rail correct connu, y compris l'usure de celui-ci dans les directions verticale et horizontale ; ou
le réseau (120SA) de capteurs (120S) et le processeur (140) sont configurés pour déterminer des défauts de surface, y compris des squats, un écaillage, une ondulation et une déformation dans la direction verticale ; ou
le réseau (120SA) de capteurs (1205) et le processeur (140) sont configurés pour déterminer une dimension d'écarts au niveau des joints de rail et/ou un agrégat des dimensions de joints de rail sur une longueur d'au moins deux joints de rail ; ou
toute combinaison de l'un quelconque ou plusieurs des éléments ci-dessus.

4. Système (100) de détection et de mesure de défauts de voie incluant un degré de défauts d'usure, de défauts de structure et de déformations de voie ferrée selon la revendication 1, dans lequel :
le processeur (140) est configuré pour récupérer des données de mesure de distance pendant une période de temps prédéterminée pour déterminer un taux d'usure et/ou de défauts dans la voie et/ou le rail sur la période de temps prédéterminée ; ou
le processeur (140) est configuré pour récupérer des données de mesure de distance pendant une période de temps prédéterminée pour déterminer un historique d'usure et/ou de défauts dans la voie et/ou le rail sur la période de temps prédéterminée ; ou
le processeur (140) est configuré pour récupérer des données de mesure de distance pour une longueur de voie et/ou de rail dans une zone géographique prédéterminée pour déterminer un taux d'usure et/ou de défauts dans la voie et/ou le rail sur la zone géographique prédéterminée ; ou
le processeur (140) est configuré pour récupérer des données de mesure de distance pour une longueur de voie et/ou de rail dans une zone géographique prédéterminée pour déterminer un historique d'usure et/ou de défauts dans la voie et/ou le rail sur la zone géographique prédéterminée ; ou
le processeur (140) est configuré pour récupérer des données de mesure de distance pour identifier une usure et/ou des défauts dans la voie et/ou le rail qui nécessitent une inspection, une maintenance et/ou une réparation dans une période de temps prédéterminée ; ou
le processeur (140) est configuré pour récupérer des données de mesure de distance pour identifier une usure et/ou des défauts dans la voie et/ou le rail qui nécessitent une inspection, une maintenance et/ou une réparation dans une zone géographique prédéterminée ; ou
le processeur (140) est configuré pour récupérer des données de mesure de distance pour déterminer un historique de taux d'usure et/ou de défauts dans la voie et/ou le rail qui ont nécessité une inspection, une maintenance et/ou une réparation dans une période de temps prédéterminée ; ou
le processeur (140) est configuré pour récupérer des données de mesure de distance pour déterminer un historique de taux d'usure et/ou de défauts dans la voie et/ou le rail qui nécessitent une inspection, une maintenance et/ou une réparation dans une zone géographique prédéterminée ; ou
toute combinaison de l'un quelconque ou plusieurs des éléments ci-dessus.

5. Système (100) de détection et de mesure de défauts de voie incluant un degré de défauts d'usure, de défauts de structure et de déformations de voie ferrée selon la revendication 4, dans lequel :
le processeur (140) est configuré pour déterminer, à partir des données de mesure de distance récupérées, un modèle des taux d'usure et/ou de défauts dans la voie et/ou le rail ; et
le processeur (140) est configuré pour appliquer le modèle déterminé afin d'extrapoler les données de mesure de distance récupérées pour l'usure et/ou les défauts dans la voie et/ou le rail pour un temps de prédiction sélectionné dans le futur.

6. Système (100) de détection et de mesure de défauts de voie incluant un degré de défauts d'usure, de défauts de structure et de déformations de voie ferrée selon la revendication 1, dans lequel le réseau (120SA) de capteurs est un premier réseau de capteurs (120S), le système comprenant en outre :
un deuxième réseau (120SA) de capteurs incluant plusieurs capteurs (1205) de mesure de distance à temps de vol (TOF) agencés pour mesurer une distance par rapport au champignon de rail (226) afin d'obtenir des données dimensionnelles du champignon de rail, dans lequel le deuxième réseau (120SA) de capteurs est fonctionnellement le même que le premier réseau (120SA) de capteurs selon la revendication 1,
dans lequel le premier réseau (120SA) de capteurs (120S) est positionné pour avoir un premier rail d'une voie dans son champ de vision et le deuxième réseau (120SA) de capteurs est positionné pour avoir un deuxième rail de la voie dans son champ de vision ;
dans lequel la mémoire (144) est destinée à recevoir et à stocker des données de mesure de distance à partir du deuxième réseau (120SA) de capteurs (120S) incluant des données de géomarquage associées.

7. Système (100) de détection et de mesure de défauts de voie incluant un degré de défauts d'usure, de défauts de structure et de déformations de voie ferrée selon la revendication 6, dans lequel :
le processeur (140) traite les données de mesure de distance par rapport au champignon de rail (226) du deuxième rail (220) à partir du deuxième réseau (120SA) de capteurs (1205) pour déterminer les données dimensionnelles du champignon de rail du deuxième rail incluant au moins la largeur du champignon de rail (226) de celui-ci par rapport à celle d'un rail correct connu et la hauteur du champignon de rail du deuxième rail (220) par rapport à celle d'un rail correct connu, le processeur (140) traitant les données dimensionnelles pour détecter une usure de rail et des défauts de rail du deuxième rail,
dans lequel le deuxième réseau (120SA) de capteurs (120S) est utilisé pour obtenir des données dimensionnelles à partir desquelles une usure du rail, des défauts de surface, des défauts de structure de rail, des fractures et fissures de rail, et/ou un écart (226G) dans un joint dans le rail (220), sont mesurés et détectés.

8. Système (100) de détection et de mesure de défauts de voie incluant un degré de défauts d'usure, de défauts de structure et de déformations de voie ferrée selon la revendication 6, dans lequel :
le processeur (140) traite les données de mesure de distance par rapport au champignon de rail (226) du premier rail (220) à partir du premier réseau (120SA) de capteurs (1205) et les données de mesure de distance par rapport au champignon de rail (226) du deuxième rail (220) à partir du deuxième réseau (120SA) de capteurs (120S) pour déterminer l'écartement de la voie incluant les premier et deuxième rails par rapport à celui d'un rail correct connu.

9. Système (100) de détection et de mesure de défauts de voie incluant un degré de défauts d'usure, de défauts de structure et de déformations de voie ferrée selon la revendication 1, dans lequel :
les capteurs (1205) de mesure de distance du réseau (120SA) de capteurs sont synchronisés pour fonctionner à un taux de répétition directement proportionnel à une vitesse à laquelle le réseau de capteurs se déplace dans la direction de déplacement de train.

10. Système (100) de détection et de mesure de défauts de voie incluant un degré de défauts d'usure, de défauts de structure et de déformations de voie ferrée selon la revendication 1, comprenant en outre :
une caméra (120V) associée au réseau (120SA) de capteurs (1205) pour fournir des données visuelles représentant le rail (220) dans le champ de vision (130) du réseau de capteurs, dans lequel les données visuelles sont géomarquées en étant associées à l'emplacement et à l'heure qui sont représentatifs de l'endroit et du moment où les capteurs (120S) de mesure de distance mesurent une distance.

11. Méthode (800) de détection et de mesure de défauts de voie incluant un degré de défauts d'usure, de défauts de structure et de déformations de voie de rail, dans laquelle le rail (220) présente un champignon de rail (226) ayant une largeur et une hauteur, la méthode comprenant :
l'obtention (805) d'un réseau (120SA) de capteurs incluant plusieurs capteurs (1205) de mesure de distance à temps de vol (TOF) agencés pour mesurer une distance par rapport au champignon de rail (226) afin d'obtenir des données dimensionnelles du champignon de rail ;
la configuration (805) du réseau (120SA) de capteurs (1205) pour qu'il présente un champ de vision (130) qui couvre plus de la moitié de la largeur du champignon de rail (226) d'un rail correct connu et qui couvre une distance prédéterminée le long du rail (220) dans une direction de déplacement de train ;
la configuration (805) du champ de vision (130) du réseau (120SA) de capteurs (1205) pour qu'il présente des zones de points de capteurs de mesure de distance de chacun des capteurs de mesure de distance du réseau de capteurs qui sont configurées pour couvrir ensemble au moins plus de la moitié de la largeur du champignon de rail (226) et de la distance prédéterminée dans la direction de déplacement de train,
la sélection (805) de la zone de points de chaque capteur (1205) de mesure de distance pour compléter d'autres zones de points parmi les zones de points des autres capteurs de mesure de distance afin d'obtenir des données de mesure de distance par rapport au champignon de rail (226) dans le champ de vision (130) ;
des données de mesure de distance à partir de celui-ci étant représentatives de la zone couverte de la largeur de champignon de rail et dans la direction de déplacement de train,
la synchronisation (805) des capteurs (120S) de mesure de distance du réseau (120SA) de capteurs les uns avec les autres pour mesurer une distance sensiblement simultanément et le géomarquage des données dimensionnelles provenant de ceux-ci en les associant à un emplacement et à une heure qui sont représentatifs de l'endroit et du moment où les capteurs de mesure de distance mesurent une distance ;
la réception et le stockage (844) des données de mesure de distance incluant les données de géomarquage associées ;
le traitement (800P) des données de mesure de distance par rapport au champignon de rail (226) pour déterminer les données dimensionnelles du champignon de rail incluant au moins la largeur du champignon de rail par rapport à celle d'un rail correct connu et la hauteur du champignon de rail (226) par rapport à celle d'un rail correct connu, le traitement des données dimensionnelles incluant la détection d'une usure de rail et de défauts de rail,
la méthode (800) utilisant le réseau (120SA) de capteurs (1205) pour obtenir des données dimensionnelles à partir desquelles une usure de rail, des défauts de surface, des défauts de structure de rail, des fractures et fissures de rail, et/ou un écart dans un joint dans le rail (220), sont mesurés et détectés.

12. Méthode (800) de détection et de mesure de défauts de voie incluant un degré de défauts d'usure, de défauts de structure et de déformations de voie ferrée selon la revendication 11, incluant la configuration du réseau (120SA) de capteurs (1205) pour qu'il présente un champ de vision (130) qui couvre plus que la largeur du champignon de rail (226) du rail correct connu.

13. Méthode (800) de détection et de mesure de défauts de voie incluant un degré de défauts d'usure, de défauts de structure et de déformations de voie ferrée selon la revendication 11, incluant :
la configuration (805, 800P) du réseau (120SA) de capteurs (120S) et du processeur (140) pour déterminer une usure et/ou une déformation, y compris un écoulement plastique du rail (220) ; ou
la configuration (805, 800P) du réseau (120SA) de capteurs (1205) et du processeur (140) pour déterminer une épaisseur du champignon de rail (226) par rapport au rail correct connu, y compris l'usure de celui-ci dans les directions verticale et horizontale ; ou
la configuration (805, 800P) du réseau (120SA) de capteurs (1205) et du processeur (140) pour déterminer des défauts de surface incluant des squats (2265), un écaillage, une ondulation (226C) et une déformation dans la direction verticale ; ou
la configuration (805, 800P) du réseau (120SA) de capteurs (1205) et du processeur (140) pour déterminer une dimension d'écarts (226G) au niveau des joints de rail et/ou un agrégat des dimensions de joints de rail sur une longueur d'au moins deux joints de rail ; ou
toute combinaison de l'un quelconque ou plusieurs des éléments ci-dessus.

14. Méthode (800) de détection et de mesure de défauts de voie incluant un degré de défauts d'usure, de défauts de structure et de déformations de voie ferrée selon la revendication 11, dans laquelle :
la configuration du traitement (800P) pour récupérer des données de mesure de distance pendant une période de temps prédéterminée pour déterminer un taux d'usure et/ou de défauts dans la voie et/ou le rail sur la période de temps prédéterminée ; ou
la configuration du traitement (800P) pour récupérer des données de mesure de distance pendant une période de temps prédéterminée pour déterminer un historique d'usure et/ou de défauts dans la voie et/ou le rail sur la période de temps prédéterminée ; ou
la configuration du traitement (800P) pour récupérer des données de mesure de distance pour une longueur de voie et/ou de rail dans une zone géographique prédéterminée pour déterminer un taux d'usure et/ou de défauts dans la voie et/ou le rail sur la zone géographique prédéterminée ; ou
la configuration du traitement (800P) pour récupérer des données de mesure de distance pour une longueur de voie et/ou de rail dans une zone géographique prédéterminée pour déterminer un historique d'usure et/ou de défauts dans la voie et/ou le rail sur la zone géographique prédéterminée ; ou
la configuration du traitement (800P) pour récupérer des données de mesure de distance pour identifier une usure et/ou des défauts dans la voie et/ou le rail qui nécessitent une inspection, une maintenance et/ou une réparation dans une période de temps prédéterminée ; ou
la configuration du traitement (800P) pour récupérer des données de mesure de distance pour identifier une usure et/ou des défauts dans la voie et/ou le rail qui nécessitent une inspection, une maintenance et/ou une réparation dans une zone géographique prédéterminée ; ou
la configuration du traitement (800P) pour récupérer des données de mesure de distance pour déterminer un historique de taux d'usure et/ou de défauts dans la voie et/ou le rail qui ont nécessité une inspection, une maintenance et/ou une réparation dans une période de temps prédéterminée ; ou
la configuration du traitement (800P) pour récupérer des données de mesure de distance pour déterminer un historique de taux d'usure et/ou de défauts dans la voie et/ou le rail qui nécessitent une inspection, une maintenance et/ou une réparation dans une zone géographique prédéterminée ; ou
toute combinaison de l'un quelconque ou plusieurs des éléments ci-dessus.

15. Méthode (800) de détection et de mesure de défauts de voie incluant un degré de défauts d'usure, de défauts de structure et de déformations de voie ferrée selon la revendication 14, incluant :
la configuration du traitement (800P) pour déterminer, à partir des données de mesure de distance récupérées, un modèle des taux d'usure et/ou de défauts dans la voie et/ou le rail ; et
la configuration du traitement (800P) pour appliquer le modèle déterminé afin d'extrapoler les données de mesure de distance récupérées pour l'usure et/ou les défauts dans la voie et/ou le rail pour un temps de prédiction sélectionné dans le futur.

16. Méthode (800) de détection et de mesure de défauts de voie incluant un degré de défauts d'usure, de défauts de structure et de déformations de voie ferrée selon la revendication 11, incluant :
l'étalonnage (810) du réseau (120SA) de capteurs (120S) vers une voie correcte connue et/ou vers un rail correct connu.

17. Méthode (800) de détection et de mesure de défauts de voie incluant un degré de défauts d'usure, de défauts de structure et de déformations de voie ferrée selon la revendication 11, incluant :
la configuration (805, 800P) du réseau (120SA) de capteurs (1205) et du processeur (140) pour déterminer des défauts de surface incluant des squats (226S), un écaillage, une ondulation (226C) et une déformation ; ou
la configuration (805, 800P) du réseau (120SA) de capteurs (1205) et du processeur (140) pour déterminer une dimension d'écarts (226G) au niveau des joints de rail et/ou un agrégat des dimensions de joints de rail sur une longueur d'au moins deux joints de rail ; ou
la configuration (805, 800P) du réseau (120SA) de capteurs (1205) et du processeur (140) pour déterminer un taux de défauts sur une période de temps prédéterminée ; ou
toute combinaison de l'un quelconque ou plusieurs des éléments ci-dessus.

18. Méthode (800) de détection et de mesure de défauts de voie incluant un degré de défauts d'usure, de défauts de structure et de déformations de voie ferrée selon la revendication 11, dans laquelle le réseau (120SA) de capteurs obtenu est un premier réseau de capteurs (1205), la méthode comprenant en outre :
l'obtention (805, 800A) d'un deuxième réseau (120SA) de capteurs incluant plusieurs capteurs (1205) de mesure de distance à temps de vol (TOF) agencés pour mesurer une distance par rapport au champignon de rail (226) afin d'obtenir des données dimensionnelles du champignon de rail, dans laquelle le deuxième réseau (120SA) de capteurs est fonctionnellement le même que le premier réseau (120SA) de capteurs (120S) selon la revendication 11,
le positionnement (805) du premier réseau (120SA) de capteurs (1205) de sorte qu'il ait un premier rail (220) d'une voie dans son champ de vision (130) et le positionnement du deuxième réseau (120SA) de capteurs (120S) de sorte qu'il ait un deuxième rail (220) de la voie dans son champ de vision (130) ;
dans laquelle la réception et le stockage (800A) de données de mesure de distance incluent la réception et le stockage de données de mesure de distance à partir du premier réseau (120SA) de capteurs (1205) et à partir du deuxième réseau (120SA) de capteurs (120S) incluant leurs données de géomarquage associées.

19. Méthode (800) de détection et de mesure de défauts de voie incluant un degré de défauts d'usure, de défauts de structure et de déformations de voie ferrée selon la revendication 18, incluant en outre :
le traitement (800P) des données de mesure de distance par rapport au champignon de rail (226) du deuxième rail (220) à partir du deuxième réseau (120SA) de capteurs (1205) pour déterminer les données dimensionnelles du champignon de rail du deuxième rail incluant au moins la largeur du champignon de rail (226) de celui-ci par rapport à celle d'un rail correct connu et la hauteur du champignon de rail du deuxième rail (220) par rapport à celle d'un rail correct connu, pour le traitement des données dimensionnelles pour détecter une usure de rail et des défauts de rail du deuxième rail, et
l'utilisation (800A) du deuxième réseau (120SA) de capteurs (1205) pour obtenir des données dimensionnelles à partir desquelles une usure de rail, des défauts de surface, des défauts de structure de rail, des fractures et fissures de rail, et/ou un écart dans un joint dans le rail, sont mesurés et détectés.

20. Méthode (800) de détection et de mesure de défauts de voie incluant un degré de défauts d'usure, de défauts de structure et de déformations de voie ferrée selon la revendication 11, dans laquelle la synchronisation des capteurs (1205) de mesure de distance du réseau (120SA) de capteurs inclut :
la synchronisation (805, 800A) des capteurs (1205) de mesure de distance du réseau (120SA) de capteurs pour qu'ils fonctionnent à un taux de répétition directement proportionnel à une vitesse à laquelle le réseau de capteurs se déplace dans la direction de déplacement de train.

21. Méthode (800) de détection et de mesure de défauts de voie incluant un degré de défauts d'usure, de défauts de structure et de déformations de voie ferrée selon la revendication 11, incluant en outre :
la fourniture (800M) de données visuelles représentant le champignon de rail (226) dans le champ de vision (130) du réseau (120SA) de capteurs (120S), et le géomarquage des données visuelles en associant les données visuelles à l'emplacement et à l'heure qui sont représentatifs de l'endroit et du moment où les capteurs (120S) de mesure de distance mesurent la distance.
